# EUROPEAN PATENT APPLICATION

(11) **EP 4 400 994 A1**
(43) Date of publication of application: **17.07.2024**
(21) Application number: 22914109.8
(22) Date of filing: 07.12.2022
(51) Int. Cl.: G06F 21/32, G06F 21/62, G06F 21/60, G06F 21/64, G06F 40/30

(54) **DATA PROTECTION METHOD AND ELECTRONIC DEVICE**

(30) Priority: 28.12.2021 CN 202111633199
(71) Applicant: Huawei Technologies Co., Ltd., Shenzhen, Guangdong 518129 (CN)
(72) Inventor: YAO, Xifeng, Shenzhen, Guangdong 518129 (CN); CHEN, Kaiji, Shenzhen, Guangdong 518129 (CN)
(74) Representative: Thun, Clemens
(86) International application number: PCT/CN2022/137190
(87) International publication number: WO 2023/124854

(57) **Abstract**

Embodiments of this application provide a data protection method and an electronic device, and relate to the field of electronic technologies. According to the data protection method provided in embodiments of this application, after obtaining data related to a user in a plurality of manners, the electronic device may automatically determine a privacy degree of the data, for example, a privacy degree of identity information is high, and a privacy degree of itinerary information is low. The electronic device selects, based on different privacy degrees of the data, presentation manners corresponding to the different privacy degrees to present the data when the data needs to be presented, so that data with different privacy degrees can be differentially protected, and privacy security of the user can be ensured.

## Description

This application claims priority to Chinese Patent Application No. 202111633199.8, filed with the China National Intellectual Property Administration on December 28, 2021 and entitled "DATA PROTECTION METHOD AND ELECTRONIC DEVICE", which is incorporated herein by reference in its entirety.

### TECHNICAL FIELD

This application relates to the field of electronic technologies, and in particular, to a data protection method and an electronic device.

### BACKGROUND

With development of electronic technologies, functions of electronic devices are continuously enhanced, and the electronic devices are increasingly frequently used in people's daily life. The electronic device may help a user record itinerary information, conference information, personal information, and the like, to facilitate the user to view the itinerary information, the conference information, and the personal information. This improves user experience.

However, when the electronic device is in an unlocked state, any user may view the itinerary information, the conference information, the personal information, and the like recorded on the electronic device.

To protect data security on the electronic device, privacy permission may be configured for some specific information, for example, a gallery. To be specific, in the unlocked state, in response to an operation of any user, the electronic device needs to pass verification again to open the gallery and browses photos and videos in the gallery.

However, the privacy permission is implemented relying on active configuration of the user, that is, the user needs to actively configure the privacy permission for some specific information on the electronic device. Further, if the user misses configuring privacy permission for some information due to negligence, the information will be viewed by another user, or the information will be read by another application, causing information leakage of the user.

### SUMMARY

Embodiments of this application provide a data protection method and an electronic device, and relate to the field of electronic technologies. According to the data protection method provided in embodiments of this application, after obtaining data related to a user in a plurality of manners, the electronic device may automatically determine a privacy degree of the data, for example, a privacy degree of identity information is high, and a privacy degree of itinerary information is low. The electronic device selects, based on different privacy degrees of the data, presentation manners corresponding to the different privacy degrees to present the data when the data needs to be presented, so that data with different privacy degrees can be differentially protected, and privacy security of the user can be ensured.

According to a first aspect, an embodiment of this application provides a data protection method and an electronic device. The method includes: receiving a first input, and obtaining first target data, where a source of the first input includes at least one of a voice input of a user, a text input of the user, and information obtained from an application on the electronic device; storing the first target data; determining a privacy level of the first target data as a first privacy level, where different privacy levels correspond to different presentation manners; receiving a first request, where the first request is used to request to obtain the first target data; and in response to the first request, outputting the first target data in a first presentation manner corresponding to the first privacy level.

In the foregoing embodiment, the electronic device identifies a privacy degree of target data by determining a privacy level of the target data, and determines different presentation manners based on the privacy level of the target data. After receiving a request for obtaining the target data, the electronic device may use different protection manners for data with different privacy degrees, to implement differentiated data protection.

With reference to some embodiments of the first aspect, in some embodiments, the determining a privacy level of the first target data as a first privacy level specifically includes: after the first request is received, determining the privacy level of the first target data as the first privacy level; or before the storing the first target data, determining the privacy level of the first target data as the first privacy level, and storing the first target data and the first privacy level.

In the foregoing embodiment, after obtaining the target data, the electronic device may determine the privacy level of the target data, store the target data and the privacy level of the target data together, and after receiving the request, may directly present the data in a presentation manner corresponding to the privacy level, so that a response is fast. Alternatively, the electronic device may determine the privacy level of the target data after receiving the request for the target data. For some target data that is not requested, a privacy level of the target data may not be determined first, so that a calculation amount of determining the privacy level of the target data can be reduced.

With reference to some embodiments of the first aspect, in some embodiments, the storing the first target data and the first privacy level specifically includes: storing the first target data and the first privacy level in a first storage manner, where the first storage manner corresponds to the first privacy level, the different privacy levels correspond to different storage manners, the storage manner includes the first storage manner, and the first storage manner includes a first encryption manner, a first storage area, and a first storage format.

In the foregoing embodiment, after the privacy level of the target data is determined before the target data is stored, the target data may be stored in a storage manner corresponding to the privacy level. The storage manner includes an encryption manner, a storage area, and a storage format. Encryption manners of the target data at different privacy levels are different, storage areas of the target data at different privacy levels are different, and storage formats of the target data at different privacy levels are different. Encryption manners of data at different privacy levels are different, so that an encryption manner with higher security may be selected for data at a high privacy level, and encryption may not be performed on data at a low privacy level. In this way, computing resources are properly allocated, and the target data at a high privacy level is preferentially protected. Storage areas of data at different privacy levels are different, so that a malicious application can be prevented from obtaining all target data by directly accessing an address. In addition, when searching for target data at different privacy levels, the electronic device stores the data at different privacy levels in different storage areas, so that a calculation amount of traversing and searching for the target data by the electronic device can be reduced.

With reference to some embodiments of the first aspect, in some embodiments, the determining a privacy level of the first target data as a first privacy level specifically includes: determining a semantic meaning of the first target data as a first semantic meaning; and determining, based on the first semantic meaning, the privacy level of the first target data as the first privacy level.

In the foregoing embodiment, the privacy level of the target data may be determined by using a semantic meaning of the target data. Compared with another feature of the target data, a calculation amount of determining the privacy level of the target data by using the semantic meaning of the target data may be reduced. In addition, the privacy level of the target data is more accurately determined by using the semantic meaning of the target data.

With reference to some embodiments of the first aspect, in some embodiments, the determining a semantic meaning of the first target data as a first semantic meaning specifically includes: determining, based on the first target data and a context of the first target data, the semantic meaning of the first target data as the first semantic meaning.

In the foregoing embodiment, because the semantic meaning of the target data directly affects determining of the privacy level of the target data, a more accurate semantic meaning may be determined by using a context of the target data, so as to determine a more accurate privacy level of the target data.

With reference to some embodiments of the first aspect, in some embodiments, the privacy level is further related to a device type of an electronic device that receives the first input for the first time; and the determining, based on the first semantic meaning, the privacy level of the first target data as the first privacy level specifically includes: determining, based on the semantic meaning of the first target data and the device type of the electronic device, the privacy level of the first target data as the first privacy level, where the device type includes a private device and a public device, and the public device is an electronic device used by a plurality of users.

In the foregoing embodiment, considering a usage habit of a user, same target data stored in electronic devices of different types should have different privacy levels. For example, when the user stores one piece of target data in the public device, there is a high probability that the target data is used for sharing. Therefore, a privacy level of the target data may be appropriately lowered, so as to avoid a case in which another user cannot view the target data. Therefore, the privacy level of the target data may be determined based on the semantic meaning of the target data and the device type. This better complies with the usage habit of the user, and improves user experience.

With reference to some embodiments of the first aspect, in some embodiments, the method further includes: receiving third target data, where a second electronic device that receives the third target data for the first time is the public device, and the first electronic device is the private device; and determining, based on a semantic meaning of the third target data and a device type of the second electronic device, a privacy level of the third target data as a third privacy level, where the semantic meaning of the third target data is the same as or similar to the semantic meaning of the first target data, and the third privacy level is lower than the first privacy level.

In the foregoing embodiment, the electronic device may obtain target data sent by another electronic device, and determine the privacy level of the target data based on the target data and an electronic device type of an electronic device that receives the target data for the first time.

With reference to some embodiments of the first aspect, in some embodiments, the first target data has time validity, and the method further includes: determining that time information in the first target data is a first time identifier, where the first time identifier corresponds to a first moment, and the first target data has different privacy levels before the first moment and after the first moment.

In the foregoing embodiment, when the target data has the time validity, the electronic device further updates the privacy level of the target data over time.

With reference to some embodiments of the first aspect, in some embodiments, that the first target data has different privacy levels before the first moment and after the first moment specifically includes: determining the privacy level of the first target data as the first privacy level before the first moment; and updating the privacy level of the first target data to a fourth privacy level after the first moment.

In the foregoing embodiment, when the target data has the time validity, time information in the target data may be used as a time identifier. Before and after the time identifier, privacy levels of the target data are different, and presentation manners of the target data are different.

With reference to some embodiments of the first aspect, in some embodiments, the determining a privacy level of the first target data as a first privacy level specifically includes: determining, based on a privacy level identification model and the first target data, the privacy level of the first target data as the first privacy level, where an input of the privacy level identification model includes target data or a feature used to represent the target data, and an output of the privacy level identification model includes a privacy level of the target data.

In the foregoing embodiment, there may be a privacy level identification model in the electronic device, and the target data may be input into the privacy level identification model to obtain the privacy level of the target data. A parameter of the model may be updated in real time with a cloud.

With reference to some embodiments of the first aspect, in some embodiments, the privacy level identification model is further configured to determine a mapping relationship between a semantic meaning of the first target data and the privacy level of the first target data.

In the foregoing embodiment, the input of the privacy level identification model may alternatively be the semantic meaning of the target data, and the semantic meaning of the target data is used as one of the features of the target data. The semantic meaning of the target data is selected as the input of the privacy level identification model, so that complexity of the privacy level identification model can be reduced.

With reference to some embodiments of the first aspect, in some embodiments, the method further includes: receiving a second input, and obtaining second target data, where the second target data is different from the first target data; storing the second target data; determining a privacy level of the second target data as a second privacy level, where the second privacy level is different from the first privacy level; receiving a second request, where the second request is used to request to obtain the second target data; and in response to the second request, outputting the second target data in a second presentation manner corresponding to the second privacy level, where the second presentation manner is different from the first presentation manner.

In the foregoing embodiment, different target data may have different privacy levels, and may have different presentation manners.

With reference to some embodiments of the first aspect, in some embodiments, the presentation manner includes one or a combination of a display manner and a verification manner. The verification manner is used to verify a user identity, and the display manner includes one or more of text display and voice broadcast.

In the foregoing embodiment, the presentation manner includes the display manner and/or the verification manner. The display manner may include the text display, the voice broadcast, synchronization, and the like. The verification manner may include fingerprint verification, iris verification, and the like.

With reference to some embodiments of the first aspect, in some embodiments, the first target data includes identity information or property information, and the second target data includes itinerary information or conference information.

In the foregoing embodiment, the first target data may be the identity information or the property information, the second target data may be the itinerary information or the conference information, and a privacy degree of the first target data is different from a privacy degree of the second target data.

According to a second aspect, an embodiment of this application provides a data protection method and an electronic device. The method includes: in response to a first input, obtaining and storing first target data; in response to a second input, obtaining and storing second target data; receiving a first request of a user for obtaining the first target data, and outputting the first target data to the user in a first presentation manner; and receiving a second request of the user for obtaining the second target data, and outputting the second target data to the user in a second presentation manner, where the first electronic device determines that privacy degrees of the first target data and the second target data are different, and the first presentation manner is different from the second presentation manner.

In the foregoing embodiment, the electronic device receives the target data with different privacy degrees, automatically determines the privacy degree of the target data, and then presents the target data in different presentation manners after the user requests the target data, so that the target data with different privacy degrees is differentially protected.

With reference to some embodiments of the second aspect, in some embodiments, the electronic device identifies different privacy degrees by using a privacy level, and that the electronic device determines that privacy degrees of the first target data and the second target data are different, and the first presentation manner is different from the second presentation manner specifically includes: The first electronic device determines that the privacy level of the first target data is a first privacy level, and the privacy level of the second target data is a second privacy level, where the first privacy level is higher than the second privacy level, and security of the first presentation manner is higher than security of the second presentation manner.

In the foregoing embodiment, the privacy degree may be identified by using the privacy level. Different privacy levels correspond to different presentation manners, and security of a presentation manner of the target data with a high privacy level is higher than security of a presentation manner of the target data with a low privacy level.

With reference to some embodiments of the second aspect, in some embodiments, a quantity of times of verification manners included in the first presentation manner is greater than a quantity of times of verification included in the second presentation manner; and/or security of the verification manner included in the first presentation manner is higher than security of the verification manner included in the second presentation manner; and/or a display manner included in the first presentation manner is text display, and a display manner included in the second presentation manner is text display and voice broadcast.

In the foregoing embodiment, it may be considered that security of the text display is higher than security of the voice broadcast. A larger quantity of verification times indicates higher security of the presentation manner, and higher security of the verification manner indicates higher security of the presentation manner.

With reference to some embodiments of the second aspect, in some embodiments, the privacy level is related to a semantic meaning of target data; and that the first electronic device determines that privacy degrees of the first target data and the second target data are different specifically includes: The first electronic device determines, based on a semantic meaning of the first target data, that the first target data is at the first privacy level; and the first electronic device determines, based on a semantic meaning of the second target data, that the second target data is at the second privacy level.

In the foregoing embodiment, the privacy level of the target data is related to the semantic meaning of the target data, and a semantic feature of the target data may be determined based on the semantic meaning of the target data. The semantic feature is selected, so that the privacy level of the target data can be more accurately determined. In addition, the semantic feature instead of the target data is selected, so that a calculation amount can be reduced.

With reference to some embodiments of the second aspect, in some embodiments, the privacy level of the first target data further has time validity, the first target data has different privacy levels before a first moment corresponding to a time identifier of the first target data and after the first moment, and the method further includes: in response to a request for the first target data, presenting the first target data in the first presentation manner before the first moment; and in response to the request for the first target data, presenting the first target data in a third presentation manner after the first moment, where security of the third presentation manner is lower than security of the first presentation manner.

In the foregoing embodiment, the electronic device may further determine that the target data has time validity, and after a time corresponding to the time validity, in consideration of a reduced privacy degree of the target data, update the privacy level of the target data, so that the user can view the target data more conveniently.

With reference to some embodiments of the second aspect, in some embodiments, the privacy level is further related to a device type of an electronic device that receives the target data for the first time, and the method further includes: If a second electronic device that receives the first target data for the first time is a private device, the first electronic device determines, based on the semantic meaning of the first target data and a device type of the second electronic device, the privacy level of the first target data as the first privacy level; and if a third electronic device that receives third target data for the first time is a public device, after the third target data is received, the first electronic device determines, based on a semantic meaning of the third target data and a device type of the third electronic device, a privacy level of the third target data as a third privacy level, where the semantic meaning of the third target data is the same as or similar to the semantic meaning of the first target data, and the third privacy level is lower than the first privacy level.

In the foregoing embodiment, the electronic device may further receive target data sent by another electronic device, and determine a privacy level of the target data based on a device type of an electronic device that receives the target data for the first time, to determine the privacy level of the target data more accurately, and select a more suitable presentation manner.

With reference to some embodiments of the second aspect, in some embodiments, that the first electronic device determines that privacy degrees of the first target data and the second target data are different specifically includes: The first electronic device determines, based on a privacy level identification model, that the privacy degrees of the first target data and the second target data are different.

In the foregoing embodiment, there may be a privacy level identification model in the electronic device, and the target data may be input into the privacy level identification model to obtain the privacy level of the target data. A parameter of the model may be updated in real time with a cloud.

According to a third aspect, an embodiment of this application provides an electronic device. The electronic device includes one or more processors and a memory, where the memory is coupled to the one or more processors, the memory is configured to store computer program code, the computer program code includes computer instructions, and the one or more processors invoke the computer instructions, so that the electronic device performs the following operations: receiving a first input, and obtaining first target data, where a source of the first input includes at least one of a voice input of a user, a text input of the user, and information obtained from an application on the electronic device; storing the first target data; determining a privacy level of the first target data as a first privacy level, where different privacy levels correspond to different presentation manners; receiving a first request, where the first request is used to request to obtain the first target data; and in response to the first request, outputting the first target data in a first presentation manner corresponding to the first privacy level.

In the foregoing embodiment, the electronic device identifies a privacy degree of target data by determining a privacy level of the target data, and determines different presentation manners based on the privacy level of the target data. After receiving a request for obtaining the target data, the electronic device may use different protection manners for data with different privacy degrees, to implement differentiated data protection.

With reference to some embodiments of the third aspect, in some embodiments, the one or more processors are specifically configured to invoke the computer instructions, so that the electronic device performs the following operations: after the first request is received, determining the privacy level of the first target data as the first privacy level; or before the storing the first target data, determining the privacy level of the first target data as the first privacy level, and storing the first target data and the first privacy level.

With reference to some embodiments of the third aspect, in some embodiments, the one or more processors are specifically configured to invoke the computer instructions, so that the electronic device performs the following operation: storing the first target data and the first privacy level in a first storage manner, where the first storage manner corresponds to the first privacy level, the different privacy levels correspond to different storage manners, the storage manner includes the first storage manner, and the first storage manner includes a first encryption manner, a first storage area, and a first storage format.

With reference to some embodiments of the third aspect, in some embodiments, the one or more processors are specifically configured to invoke the computer instructions, so that the electronic device performs the following operations: determining a semantic meaning of the first target data as a first semantic meaning; and determining, based on the first semantic meaning, the privacy level of the first target data as the first privacy level.

With reference to some embodiments of the third aspect, in some embodiments, the one or more processors are specifically configured to invoke the computer instructions, so that the electronic device performs the following operation: determining, based on the first target data and a context of the first target data, the semantic meaning of the first target data as the first semantic meaning.

With reference to some embodiments of the third aspect, in some embodiments, the one or more processors are specifically configured to invoke the computer instructions, so that the electronic device performs the following operation: determining, based on the semantic meaning of the first target data and the device type of the electronic device, the privacy level of the first target data as the first privacy level, where the device type includes a private device and a public device, the public device is an electronic device used by a plurality of users, and the privacy level is further related to a device type of an electronic device that receives the first input for the first time.

With reference to some embodiments of the third aspect, in some embodiments, the one or more processors are further configured to invoke the computer instructions, so that the electronic device performs the following operations: receiving third target data, where a second electronic device that receives the third target data for the first time is the public device, and the first electronic device is the private device; and determining, based on a semantic meaning of the third target data and a device type of the second electronic device, a privacy level of the third target data as a third privacy level, where the semantic meaning of the third target data is the same as or similar to the semantic meaning of the first target data, and the third privacy level is lower than the first privacy level.

With reference to some embodiments of the third aspect, in some embodiments, the one or more processors are further configured to invoke the computer instructions, so that the electronic device performs the following operation: determining that time information in the first target data is a first time identifier, where the first time identifier corresponds to a first moment, the first target data has different privacy levels before the first moment and after the first moment, and the first target data has time validity.

With reference to some embodiments of the third aspect, in some embodiments, the one or more processors are specifically configured to invoke the computer instructions, so that the electronic device performs the following operations: determining the privacy level of the first target data as the first privacy level before the first moment; and updating the privacy level of the first target data to a fourth privacy level after the first moment.

With reference to some embodiments of the third aspect, in some embodiments, the one or more processors are specifically configured to invoke the computer instructions, so that the electronic device performs the following operations: determining, based on a privacy level identification model and the first target data, the privacy level of the first target data as the first privacy level, where an input of the privacy level identification model includes target data or a feature used to represent the target data, and an output of the privacy level identification model includes a privacy level of the target data.

With reference to some embodiments of the third aspect, in some embodiments, the privacy level identification model is further configured to determine a mapping relationship between a semantic meaning of the first target data and the privacy level of the first target data.

With reference to some embodiments of the third aspect, in some embodiments, the one or more processors are further configured to invoke the computer instructions, so that the electronic device performs the following operations: receiving a second input, and obtaining second target data, where the second target data is different from the first target data; storing the second target data; determining a privacy level of the second target data as a second privacy level, where the second privacy level is different from the first privacy level; receiving a second request, where the second request is used to request to obtain the second target data; and in response to the second request, outputting the second target data in a second presentation manner corresponding to the second privacy level, where the second presentation manner is different from the first presentation manner.

With reference to some embodiments of the third aspect, in some embodiments, the presentation manner includes one or a combination of a display manner and a verification manner. The verification manner is used to verify a user identity, and the display manner includes one or more of text display and voice broadcast.

With reference to some embodiments of the third aspect, in some embodiments, the first target data includes identity information or property information, and the second target data includes itinerary information or conference information.

According to a fourth aspect, an embodiment of this application provides an electronic device. The electronic device includes one or more processors and a memory, the memory is coupled to the one or more processors, the memory is configured to store computer program code, the computer program code includes computer instructions, and the one or more processors invoke the computer instructions, so that the electronic device performs the following operations: in response to a first input, obtaining and storing first target data; in response to a second input, obtaining and storing second target data; receiving a first request of a user for obtaining the first target data, and outputting the first target data to the user in a first presentation manner; and receiving a second request of the user for obtaining the second target data, and outputting the second target data to the user in a second presentation manner, where privacy degrees of the first target data and the second target data that are determined by an first electronic device are different, and the first presentation manner is different from the second presentation manner.

In the foregoing embodiment, the electronic device receives the target data with different privacy degrees, automatically determines the privacy degree of the target data, and then presents the target data in different presentation manners after the user requests the target data, so that the target data with different privacy degrees is differentially protected.

With reference to some embodiments of the fourth aspect, in some embodiments, the one or more processors are specifically configured to invoke the computer instructions, so that the electronic device performs the following operation: determining a privacy level of the first target data as a first privacy level, and a privacy level of the second target data as a second privacy level, where the first privacy level is higher than the second privacy level, and security of the first presentation manner is higher than security of the second presentation manner. The electronic device identifies different privacy degrees by using a privacy level.

With reference to some embodiments of the fourth aspect, in some embodiments, a quantity of times of verification manners included in the first presentation manner is greater than a quantity of times of verification included in the second presentation manner; and/or security of the verification manner included in the first presentation manner is higher than security of the verification manner included in the second presentation manner; and/or a display manner included in the first presentation manner is text display, and a display manner included in the second presentation manner is text display and voice broadcast.

With reference to some embodiments of the fourth aspect, in some embodiments, the one or more processors are specifically configured to invoke the computer instructions, so that the electronic device performs the following operations: determining, based on a semantic meaning of the first target data, that the first target data is at the first privacy level; and determining, based on a semantic meaning of the second target data, that the second target data is at the second privacy level. The privacy level is related to a semantic meaning of the target data.

With reference to some embodiments of the fourth aspect, in some embodiments, the one or more processors are further configured to invoke the computer instructions, so that the electronic device performs the following operations: in response to a request for the first target data, presenting the first target data in the first presentation manner before the first moment; and in response to the request for the first target data, presenting the first target data in a third presentation manner after the first moment, where security of the third presentation manner is lower than security of the first presentation manner. The privacy level of the first target data further has time validity, and the first target data has different privacy levels before a first moment corresponding to a time identifier of the first target data and after the first moment.

With reference to some embodiments of the fourth aspect, in some embodiments, the one or more processors are further configured to invoke the computer instructions, so that the electronic device performs the following operations: If a second electronic device that receives the first target data for the first time is a private device, the first electronic device determines, based on the semantic meaning of the first target data and a device type of the second electronic device, the privacy level of the first target data as the first privacy level; and if a third electronic device that receives third target data for the first time is a public device, after the third target data is received, the first electronic device determines, based on a semantic meaning of the third target data and a device type of the third electronic device, a privacy level of the third target data as a third privacy level, where the semantic meaning of the third target data is the same as or similar to the semantic meaning of the first target data, and the third privacy level is lower than the first privacy level. The privacy level is further related to a device type of an electronic device that receives the target data for the first time.

With reference to some embodiments of the fourth aspect, in some embodiments, the one or more processors are specifically configured to invoke the computer instructions, so that the electronic device performs the following operation: The first electronic device determines, based on a privacy level identification model, that the privacy degrees of the first target data and the second target data are different.

According to a fifth aspect, an embodiment of this application provides a chip system. The chip system is applied to an electronic device, the chip system includes one or more processors, and the processor is configured to invoke computer instructions, so that the electronic device performs the method according to any one of the first aspect or the possible implementations of the first aspect.

According to a sixth aspect, an embodiment of this application provides a computer program product including instructions. When the computer program product runs on an electronic device, the electronic device is enabled to perform the method according to any one of the first aspect and the possible implementations of the first aspect.

According to a seventh aspect, an embodiment of this application provides a computer-readable storage medium, including instructions. When the instructions are run on an electronic device, the electronic device is enabled to perform the method according to any one of the first aspect or the possible implementations of the first aspect.

It may be understood that the electronic device according to the third aspect and the fourth aspect, the chip system according to the fifth aspect, the computer program product according to the sixth aspect, and the computer-readable storage medium according to the seventh aspect are all configured to perform the method provided in embodiments of this application. Therefore, for beneficial effects that can be achieved, refer to beneficial effects in a corresponding method. Details are not described herein again.

### BRIEF DESCRIPTION OF DRAWINGS

FIG. 1A is an example schematic diagram of a process of determining a privacy level according to an embodiment of this application;
FIG. 1B is an example schematic diagram of a process of storing target data according to an embodiment of this application;
FIG. 2 is an example schematic diagram of a data protection method according to an embodiment of this application;
FIG. 3A is an example schematic diagram of obtaining raw data from a voice of a user according to an embodiment of this application;
FIG. 3B is an example schematic diagram of obtaining raw data from a non-voice input of a user according to an embodiment of this application;
FIG. 3C is an example schematic diagram of obtaining raw data from a third-party application according to an embodiment of this application;
FIG. 4 is an example schematic diagram of determining target data from raw data according to an embodiment of this application;
FIG. 5A and FIG. 5B each are an example schematic diagram of determining a privacy level of target data according to an embodiment of this application;
FIG. 6A and FIG. 6B each are another example schematic diagram of determining a privacy level of target data according to an embodiment of this application;
FIG. 6C is another example schematic diagram of determining a privacy level of target data according to an embodiment of this application;
FIG. 7 is an example schematic diagram of determining a privacy level of target data according to an embodiment of this application;
FIG. 8 is an example schematic diagram of determining a time identifier according to an embodiment of this application;
FIG. 9 is an example schematic diagram of a procedure of a data protection method according to an embodiment of this application;
FIG. 10A and FIG. 10B each are an example schematic diagram of a data protection method in a voice scenario according to an embodiment of this application;
FIG. 10C-1 to FIG. 10C-3 are another example schematic diagram of a data protection method in a voice scenario according to an embodiment of this application;

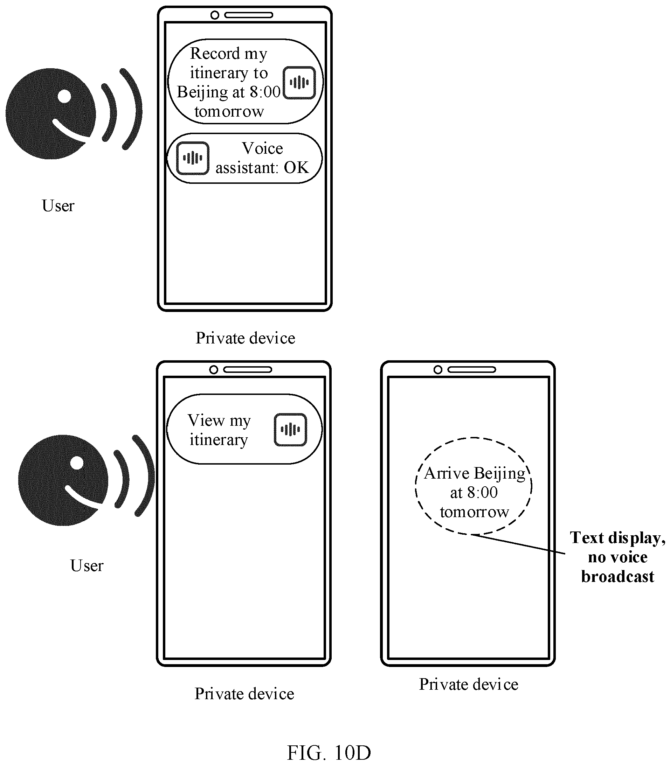

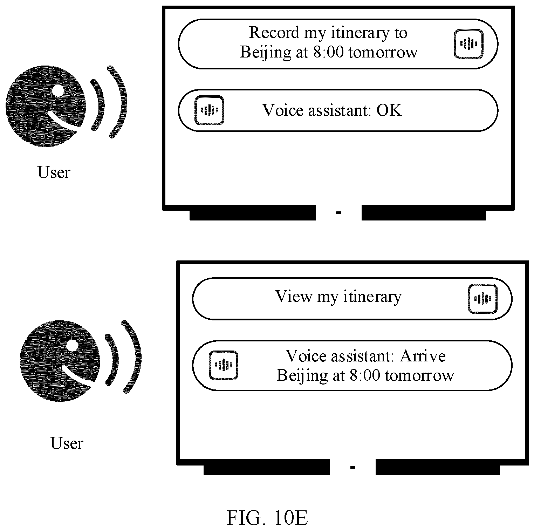

FIG. 10D and FIG. 10E each are another example schematic diagram of a data protection method in a voice scenario according to an embodiment of this application;

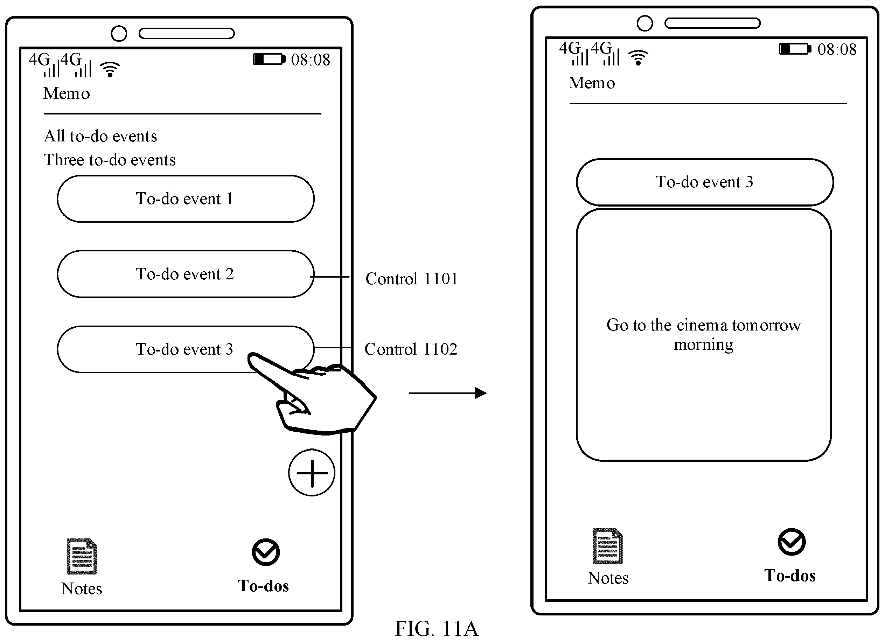

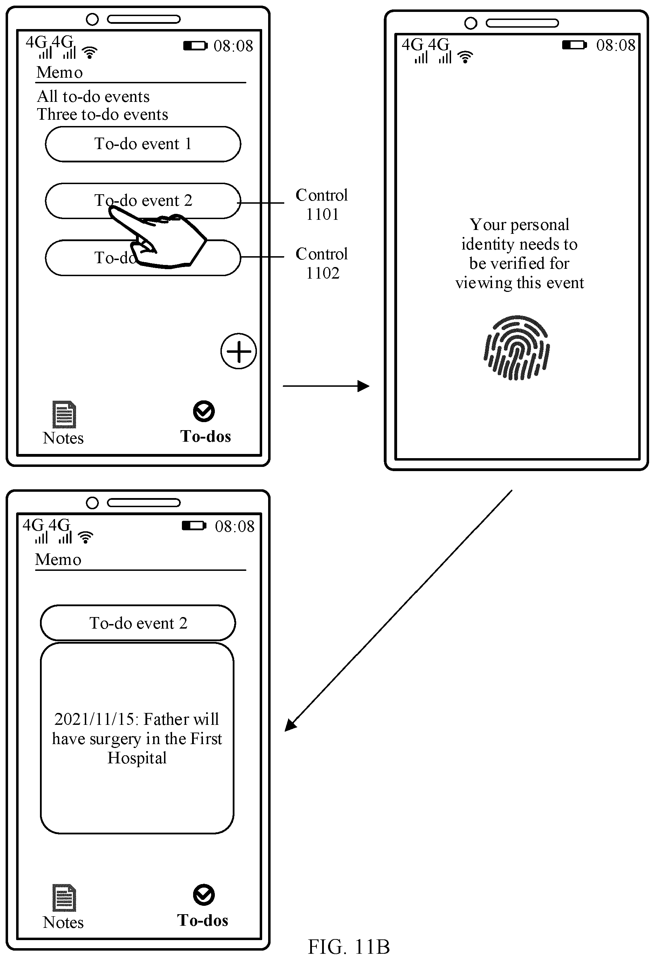

FIG. 11A and FIG. 11B each are another example schematic diagram of requesting target data according to an embodiment of this application;

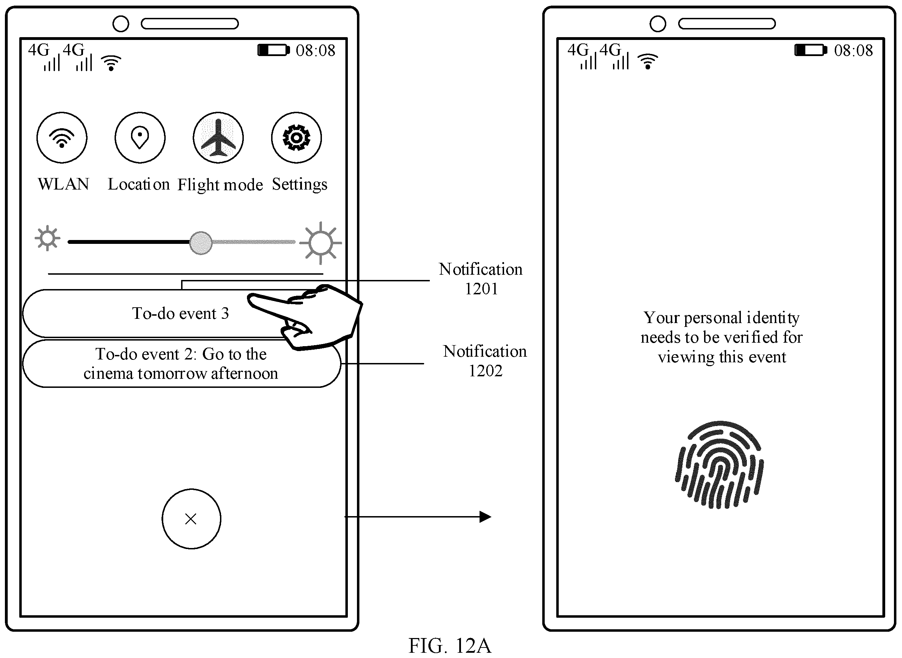

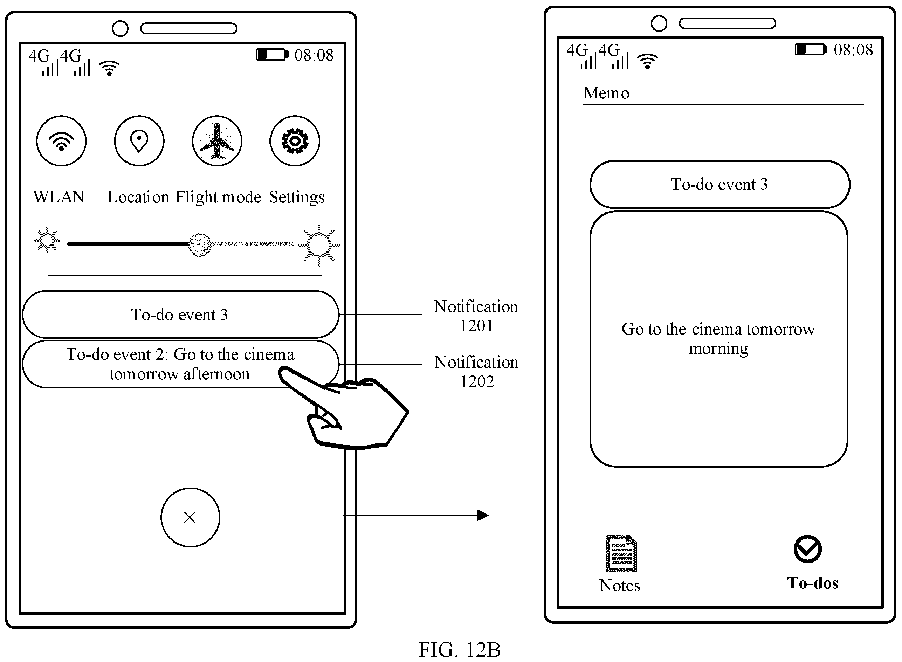

FIG. 12A and FIG. 12B each are another example schematic diagram of requesting target data according to an embodiment of this application;

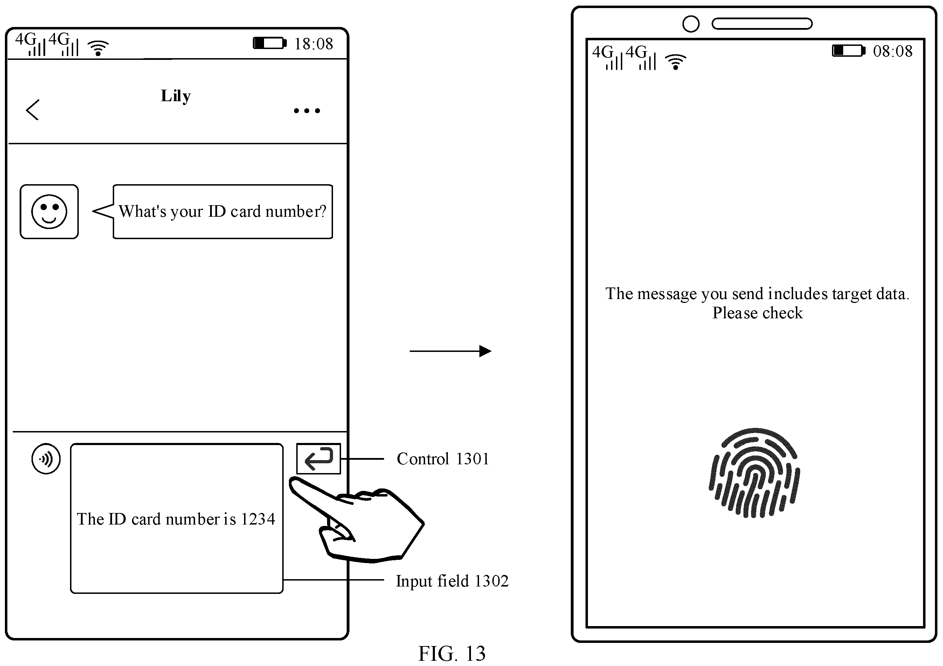

FIG. 13 is an example schematic diagram of privacy risk reminding according to an embodiment of this application;

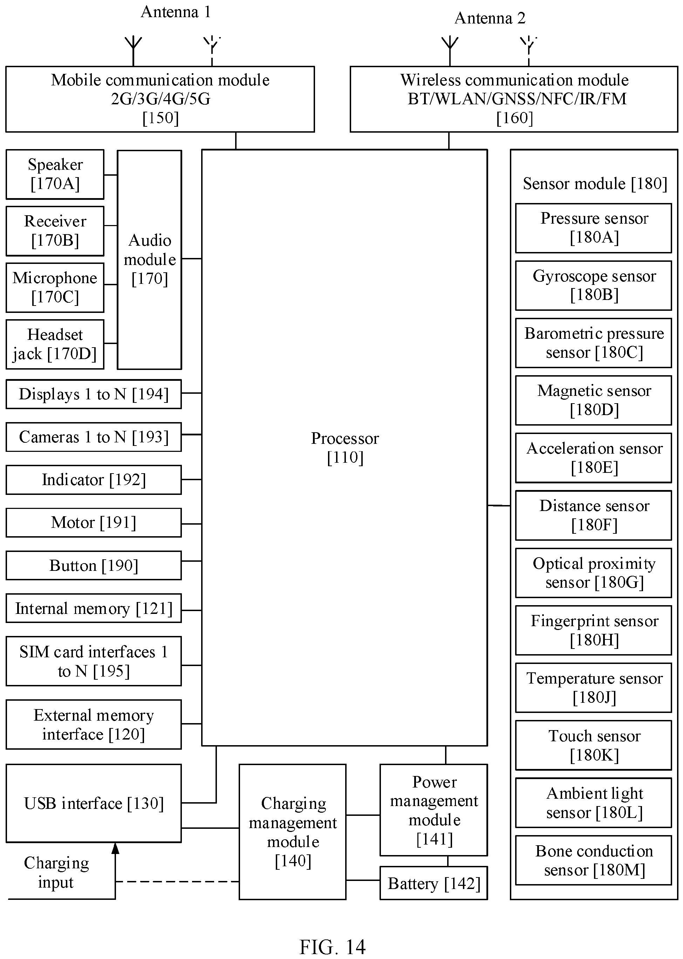

FIG. 14 is an example schematic diagram of a hardware structure of an electronic device according to an embodiment of this application;

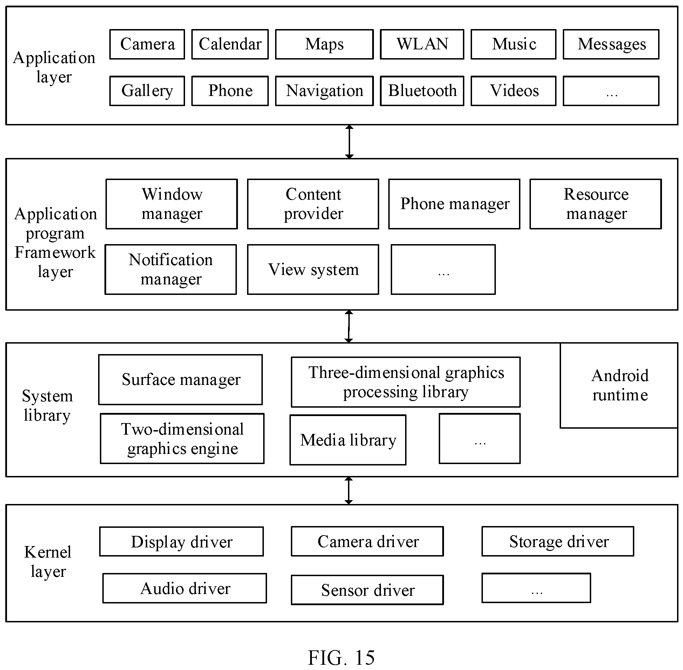

FIG. 15 is an example schematic diagram of a software architecture of an electronic device according to an embodiment of this application;

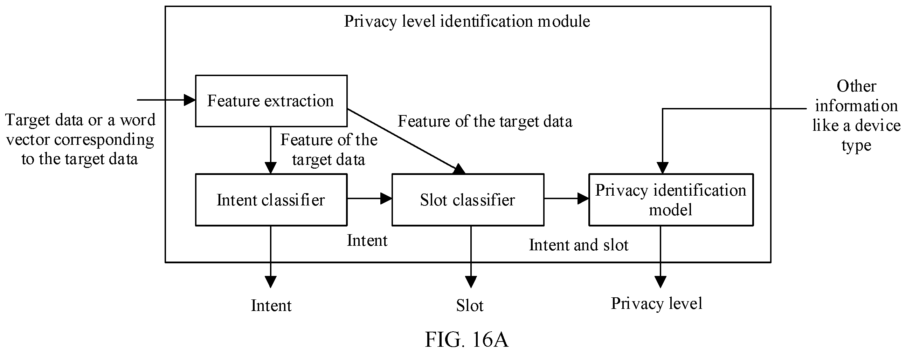

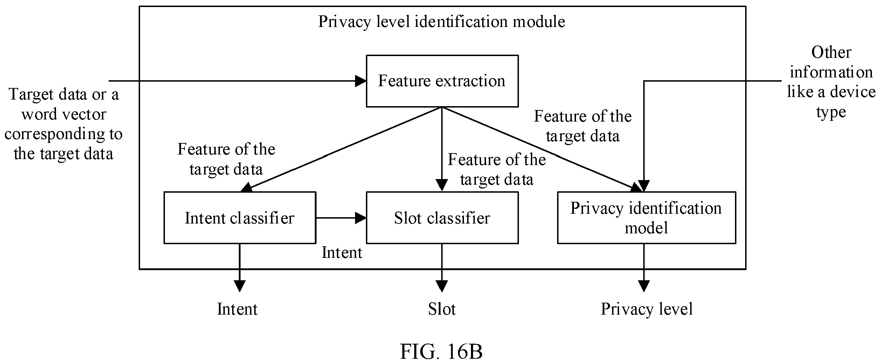

FIG. 16A and FIG. 16B each are an example schematic diagram of a privacy level identification module according to an embodiment of this application; and

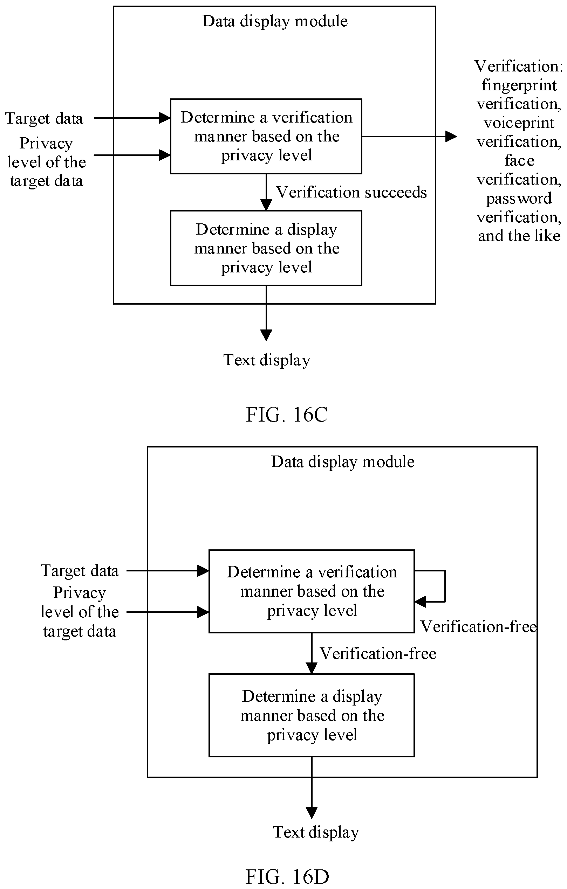

FIG. 16C and FIG. 16D each are an example schematic diagram of a data display module according to an embodiment of this application.

### DESCRIPTION OF EMBODIMENTS

Terms used in the following embodiments of this application are merely intended to describe particular embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should be further understood that the term "and/or" used in this application refers to and includes any or all possible combinations of one or more of the listed items.

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. A common representation form of the user interface is a graphical user interface (graphic user interface, GUI), which is a user interface that is displayed in a graphical manner and that is related to a computer operation. The user interface may be a visual interface element such as a text, an icon, a button, a menu, a tab, a text box, a dialog box, a status bar, a navigation bar, or a widget that is displayed on a display of the electronic device.

### (1) Implementation method of a data protection method provided in embodiments of this application

In daily life, an electronic device may record/store user information such as conference information, itinerary information, identity information, and payment information. When the electronic device is in an unlocked state, the information may be browsed and modified by any user, and the information on the electronic device is not fully protected.

Based on the foregoing problem, according to the data protection method provided in embodiments of this application, a privacy level of data may be automatically determined in the method, and a protection manner of the data is further determined based on the privacy level of the data. The protection manner includes a presentation manner of target data after the target data is requested, and may further include a storage manner of the target data. The presentation manner includes a display manner and/or a verification manner, and the storage manner includes at least one of an encryption manner, a storage area, a storage format, and the like.

The following first describes a process of protecting data by using the data protection method provided in embodiments of this application.

### (1.1) Process of protecting data by using the data protection method provided in embodiments of this application

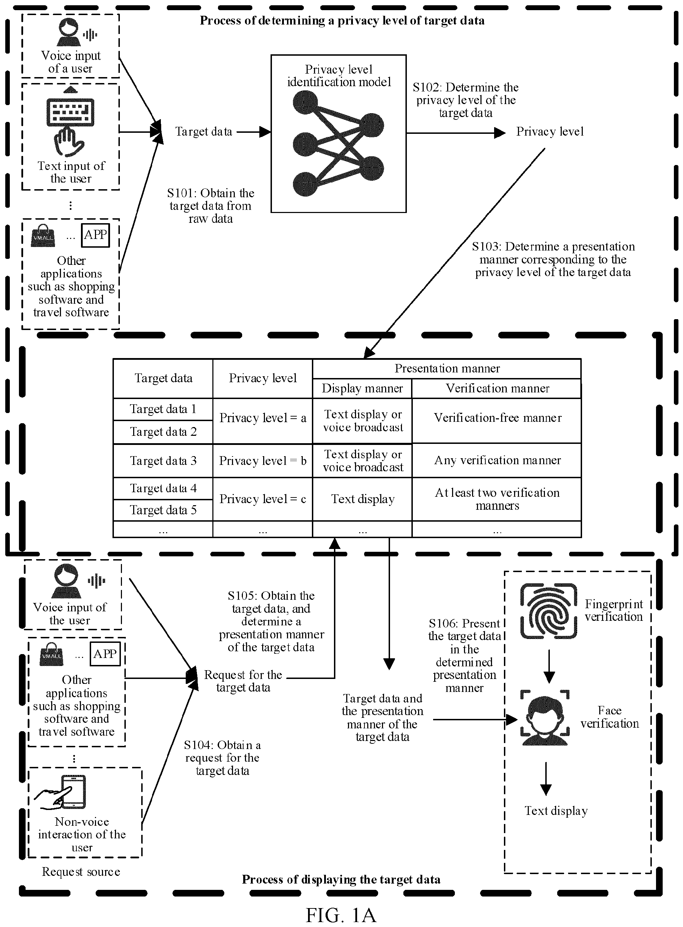

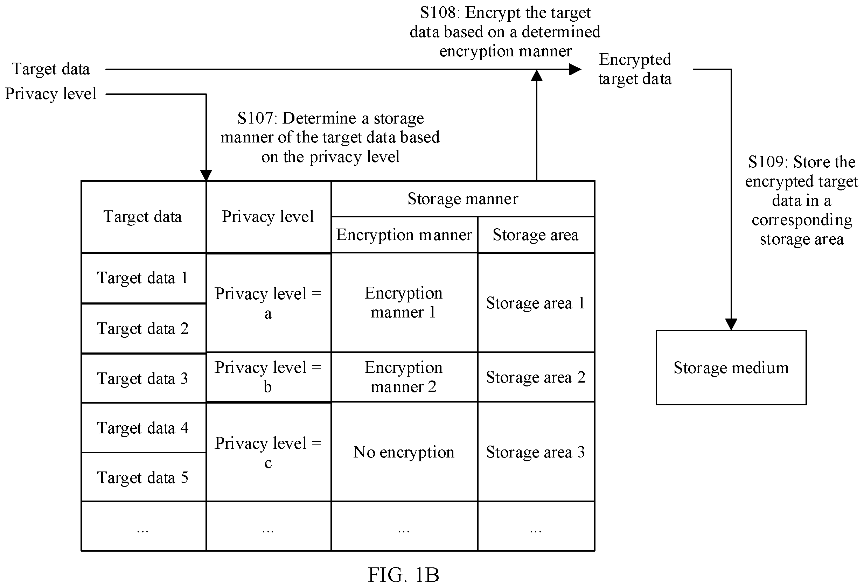

With reference to content shown in FIG. 1A and FIG. 1B, an example of the process of protecting data by using the data protection method provided in embodiments of this application is described.

FIG. 1A is an example schematic diagram of a process of determining a privacy level according to an embodiment of this application.

As shown in FIG. 1A, a process of determining a privacy level of target data may include three steps. S101: Obtain target data from raw data. S102: Determine a privacy level of the target data. S103: Determine a presentation manner corresponding to the privacy level of the target data, where the presentation includes a display manner and/or a verification manner.

S101: Obtain target data from raw data.

The raw data may be a voice input of a user, a text input of the user, an operation record and an input of the user in a third-party application like shopping software and travel software, and the like. The target data is data whose privacy level can be determined.

In some embodiments of this application, a format of the raw data may be text data. For example, the raw data is the text input of the user, and information stored in a memo by the user is the raw data. When the raw data is in a text format, the raw data may be the target data.

In some embodiments of this application, the format of the raw data may not be text data. For example, a voice assistant of the electronic device may receive a voice of the user, and the voice is the raw data. After front-end processing and speech recognition are performed on the voice, a text corresponding to the voice may be obtained, and the text may be the target data. Front-end processing can improve a signal-to-noise ratio of the sound, and speech recognition can convert the sound into the text corresponding to the sound.

S102: Determine a privacy level of the target data.

In embodiments of this application, the privacy level of the target data may be determined in a plurality of manners. This is not limited herein.

In some embodiments of this application, the electronic device may determine the privacy level of the target data by using a privacy level identification model. Alternatively, in some embodiments of this application, the electronic device may determine the privacy level of the target data according to a preset rule. The rule includes a correspondence between a keyword and the privacy level. The electronic device may perform matching on the keyword in the target data, to determine the privacy level of the target data.

The privacy level identification model is used to determine the privacy level of the target data. To be specific, an input of the privacy level identification model may be the target data, and an output may be the privacy level of the target data. Alternatively, an input of the privacy level identification model may be a semantic meaning of the target data or another feature of the target data. This is not limited herein.

The privacy level identification model may be constructed in a plurality of manners such as a recurrent neural network and a convolutional neural network. Alternatively, the privacy level identification model may be a linear classifier or a non-linear classifier. This is not limited herein. A manner of constructing the privacy level identification model may be related to the target data or a quantity of feature dimensions of the target data. For example, when a feature of the target data is a two-dimensional feature, the privacy level identification module may be a linear classifier or a non-linear classifier.

In embodiments of this application, the determined privacy level of the target data may be a fixed value, or may be a variable. For example, in FIG. 1A, a privacy level of target data 1 is equal to a, and a is a fixed value.

When the privacy level is a variable, a value of the privacy level may be related to a time identifier, or may be related to a source user/account of the target data.

For example, in some embodiments of this application, the source user/account of the target data is a user 1, a privacy level of the target data for the user 1 is a, and a privacy level of the target data for another user/account is b (b>a). In other words, the privacy level may be a variable rather than a fixed value.

For another example, in some embodiments of this application, a moment corresponding to the time identifier of the target data is MM DD, YYYY, a privacy level of the target data before MM DD, YYYY is a, and a privacy level of the target data after MM DD, YYYY is c (c<a). In other words, the privacy level may be a variable rather than a fixed value.

S103: Determine a presentation manner corresponding to the privacy level of the target data.

The electronic device may store a correspondence between the privacy level and the presentation manner, and further determine the presentation manner of the target data based on the privacy level of the target data. The presentation manner may include a display manner and/or a verification manner.

The display manner is a manner of displaying the target data, for example, may be text display or voice broadcast. The verification manner is a manner of verifying a user identity, for example, may be fingerprint verification, password verification, or face verification, iris verification.

As shown in FIG. 1A, different privacy levels correspond to different presentation manners. For example, privacy levels of target data 1 and target data 2 are a, a corresponding display manner of target data whose privacy level is a is text display or voice broadcast, and a verification manner is no verification. A privacy level of target data 3 is b, a corresponding display manner of target data whose privacy level is b is text display or voice broadcast, and a verification manner is any verification manner. Privacy levels of the target data 4 and target data 5 are c, a corresponding display manner of target data whose privacy level is c is text display, and there are at least two verification manners, for example, fingerprint verification and face verification in FIG. 1A.

As shown in FIG. 1A, after the privacy level of the target data is determined, a process of presenting the target data may include three steps. S104: Obtain a request for the target data. S105: Obtain the target data, and determine a presentation manner of the target data. S106: Present the target data in the determined presentation manner.

As shown in FIG. 1A, the request for the target data may be from a voice input of a user, non-voice interaction of a user, another application like shopping software or travel software, or the like. This is not limited herein.

It may be understood that, according to the data protection method provided in embodiments of this application, a privacy level of the target data may be determined, and a display manner and a verification manner of the target data may be determined based on the privacy level of the target data, thereby implementing differentiated protection on the target data and improving user experience.

FIG. 1B is an example schematic diagram of a process of storing target data according to an embodiment of this application.

As shown in FIG. 1B, the process of storing the target data may include three steps. S107: Determine a storage manner of the target data based on the privacy level, where the storage manner may include an encryption manner and a storage area. S108: Encrypt the target data based on a determined encryption manner. S109: Store the target data in a corresponding storage area.

For example, privacy levels of target data 1 and target data 2 are a, a corresponding encryption manner of target data whose privacy level is a is an encryption manner 1, and a storage location of the target data whose privacy level is a is a storage area 1. A privacy level of target data 3 is b, a corresponding encryption manner of target data whose privacy level is b is an encryption manner 2, and a storage location of the target data whose privacy level is b is a storage area 2. Privacy levels of the target data 4 and target data 5 are c, a corresponding encryption manner of target data whose privacy level is c is no encryption, and a storage location of the target data whose privacy level is c is a storage area 3.

It may be understood that target data with different privacy levels corresponds to different encryption manners and storage areas, so that differentiated protection can be implemented on the target data, and user experience can be improved.

### (2) Implementation and scenarios of a data protection method provided in embodiments of this application

In daily life, a user often records many events on an electronic device, for example, a conference, an itinerary, a work arrangement, an anniversary, identity information, and payment information. When the user views the information on the electronic device or another device, because different information has different sensitivity in different scenarios, different presentation manners are required to protect security of the data.

According to the data protection method provided in embodiments of this application, a privacy level of data may be automatically determined, to resolve this problem, different presentation manners may be determined based on the privacy level of the data, and different storage manners may be further determined based on the privacy level of the data.

The following describes, by using an example, a data protection method provided in an embodiment of this application.

### (2.1) Implementation of the data protection method provided in embodiments of this application

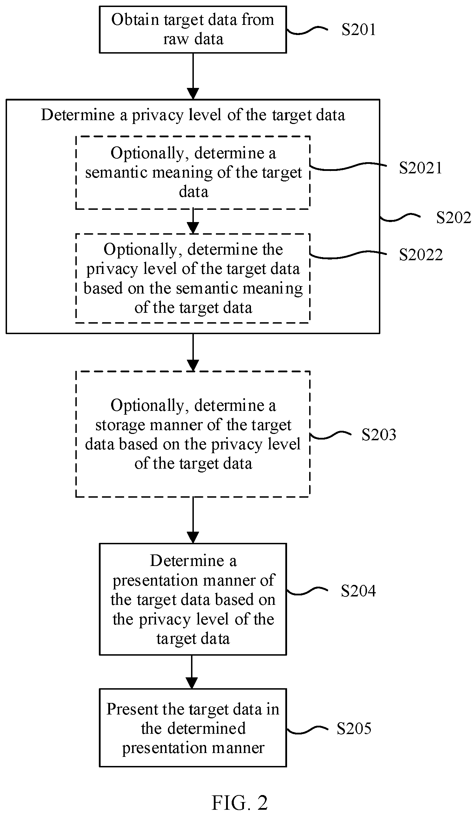

With reference to content shown in FIG. 2, the following describes an example of an implementation of the data protection method.

FIG. 2 is an example schematic diagram of a data protection method according to an embodiment of this application.

As shown in FIG. 2, the data protection method provided in this embodiment of this application may include step S201, step S202, step S203, step S204, and step S205. Step 203 is an optional step.

S201: Obtain target data from raw data.

The electronic device receives the raw data, and obtains the target data from the raw data. The following describes (a) a source of the raw data and (b) a manner of determining the target data from the raw data.

### (a) Source of the raw data

The raw data may be a non-voice input of a user, a voice input of the user, an output of a third-party application, or the like. This is not limited herein.

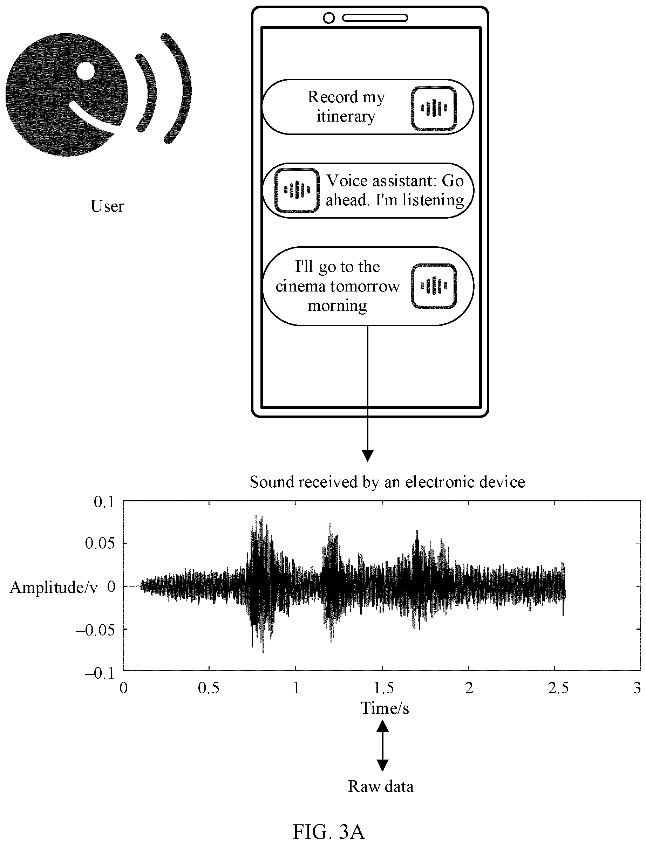

FIG. 3A is an example schematic diagram of obtaining raw data from a voice of a user according to an embodiment of this application.

The electronic device may obtain the voice of the user by using an audio input device like a microphone. The voice of the user is the raw data in this embodiment of this application.

As shown in FIG. 3A, after waking up a voice assistant of the electronic device, the user may record itinerary information, identity information, and the like by using the voice assistant. Voice content of the user includes "Record my itinerary" and "I'll go to the cinema tomorrow morning". Content responded by the voice assistant of the electronic device includes "Go ahead. I'm listening".

The voice "I'll go to the cinema tomorrow morning" may be used as the raw data in this embodiment of this application.

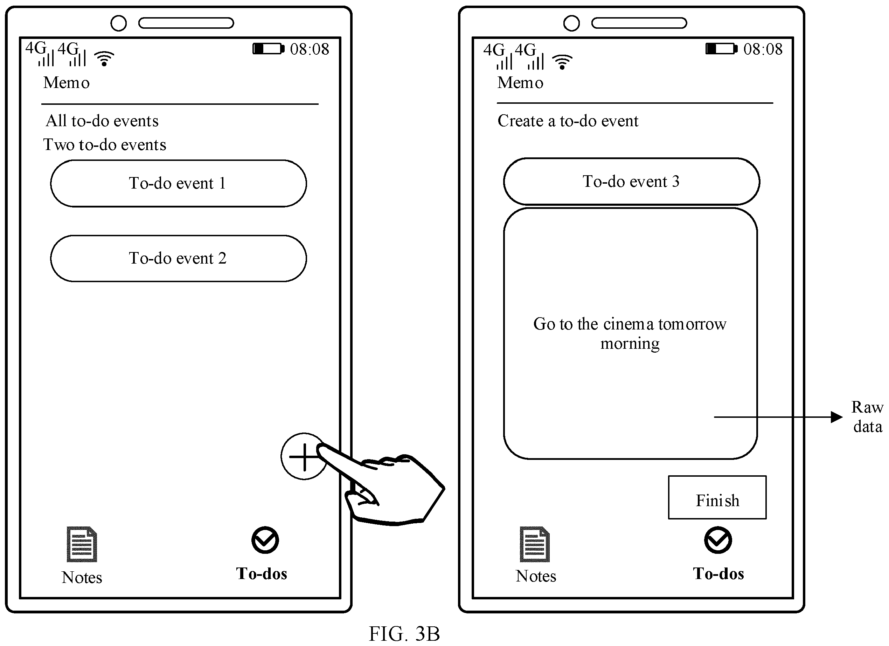

FIG. 3B is an example schematic diagram of obtaining raw data from a non-voice input of a user according to an embodiment of this application.

The user may record the itinerary information, the identity information, or the like of the user in a note application, a calendar application, a memo application, or the like. The information may be directly used as the raw data in this embodiment of this application.

As shown in FIG. 3B, in the memo application, the user may create a to-do event 3, and enter content of the to-do event 3. For example, the content may be "Go to the cinema tomorrow morning". Content of a to-do event is not limited to text, and may further be a record or the like. In the to-do event, "Go to the cinema tomorrow morning" is the raw data.

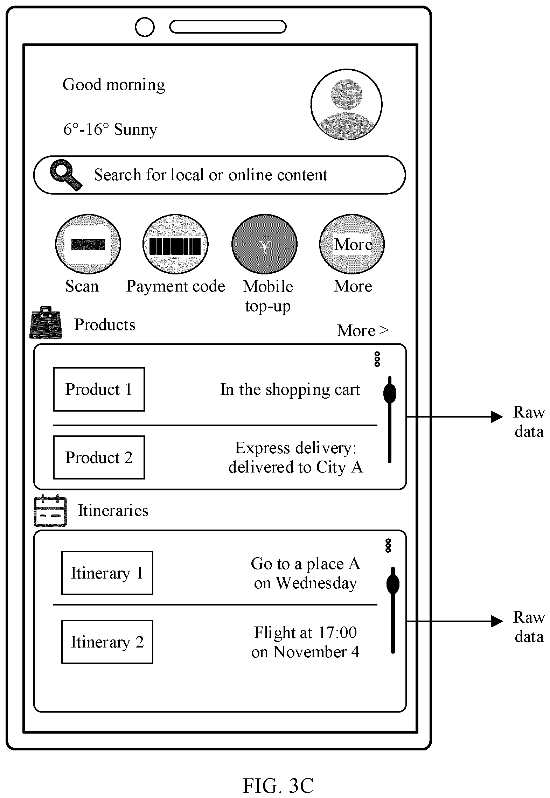

FIG. 3C is an example schematic diagram of obtaining raw data from a third-party application according to an embodiment of this application.

When the user uses a third-party application, the itinerary information, the identity information, or the like may be generated. For example, if the user purchases a commodity by using a shopping application like Taobao^{®}, Jingdong^{®}, or Amazon^{®}, commodity information like a name of the commodity and a logistics status of the commodity is the raw data in this embodiment of this application. For another example, if the user books a hotel by using a hotel application like Ctrip^{®} or Plateno^{®}, hotel information like a check-in date and a room number is the raw data in this embodiment of this application.

As shown in FIG. 3C, a leftmost screen of a launcher (launcher) application of the electronic device may integrate and display the raw data in embodiments of this application. Content displayed on the leftmost screen of the launcher application of the electronic device may include weather, a search bar, commodity information, itinerary information, and the like. The commodity information may include a name of the commodity and a status (Favorites, shopping cart, logistics status, and whether the commodity is signed for) of the commodity. The itinerary information may include an itinerary time, a destination, and the like. The commodity information, the itinerary information, and the like may be the raw data in embodiments of this application.

### (b) Manner of determining the target data from the raw data

After the raw data is obtained, the target data may be determined from the raw data.

If the raw data is in a text format, the raw data may be used as the target data. If the raw data is not in the text format, the raw data may be converted into the text format, and the converted raw data is used as the target data.

The following describes, by using an example, an example schematic diagram of converting voice data in a non-text format into the target data.

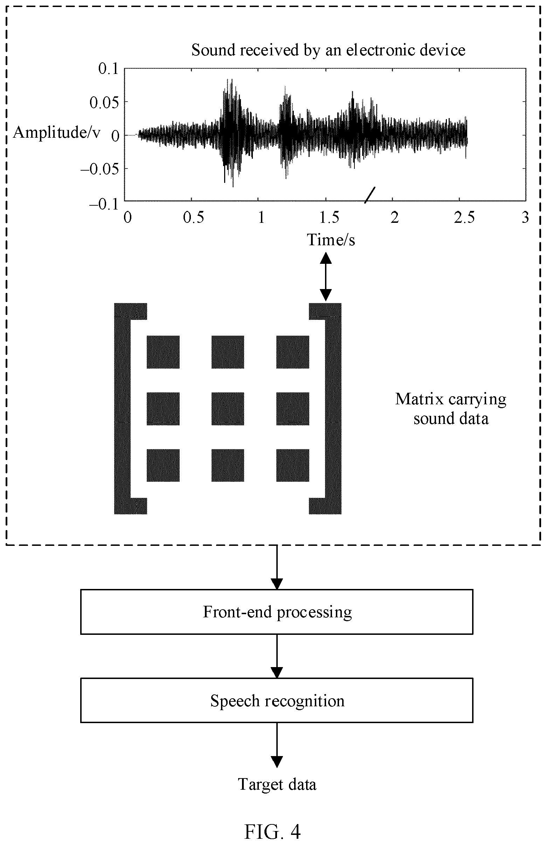

FIG. 4 is an example schematic diagram of determining target data from raw data according to an embodiment of this application.

As shown in FIG. 4, after collecting a sound, the electronic device first performs front-end processing on the collected sound. Then, the electronic device performs speech recognition on the sound that undergoes the front-end processing, and outputs data in the text format. The data in the text format may be the target data.

The front-end processing may include two parts. A first part is mainly used to increase a signal-to-noise ratio of a voice, and a second part is used to convert a voice format to an input format required in an automatic speech recognition (automatic speech recognition, ASR) method. For example, the first part may include functions such as audio coding, human voice separation by using a user voiceprint, and noise reduction, which are not limited herein. The second part may include functions such as compressed sensing, short-time Fourier transform, and wavelet transform.

The speech recognition may be implemented in a plurality of manners. This is not limited herein. For example, the speech recognition may be implemented by using an acoustic model and a language model. The acoustic model is used to determine an acoustic feature, for example, a phoneme, in voice data or other data representing voice data, and the language model is used to determine a text feature in voice data or other data representing voice data. The acoustic model and the language model are connected in series to output a text of the voice data.

For another example, the speech recognition may alternatively be end to end (end to end) implementation. To be specific, the language model and the acoustic model are neural network models constructed through joint training. An input of the neural network model is a sound, and an output is a text corresponding to the sound.

It should be noted that the text output through the speech recognition may be a Chinese character, or may be a text in another language like English. This is not limited herein.

S202: Determine a privacy level of the target data.

After the target data is obtained from the raw data, the privacy level of the target data may be determined. The privacy level of the target data indicates a protection strength of the electronic device for the target data, and may affect a display manner and a verification manner of the target data. In addition, the privacy level of the target data may further affect a storage manner, a storage format, an encryption manner, and the like of the target data. This is not limited herein.

Optionally, in some embodiments of this application, the privacy level of the target data may be determined by using a semantic meaning.

For example, as shown in step S2021 and step S2022 in FIG. 2: S2021: Optionally, determine a semantic meaning of the target data. S2022: Optionally, determine the privacy level of the target data based on the semantic meaning of the target data.

It should be noted that, in embodiments of this application, the privacy level may not be a fixed value or a set of fixed values, but is a variable related to information like a time, a user/an account of a target data source, and a device type. When the time and the user/account of the target data source are determined, the privacy level may be a fixed value, for example, high, medium, or low.

The following separately describes (a) a privacy level and (b) a manner of determining the privacy level.

### (a) Privacy level

The privacy level of the target data is related to the target data.

Optionally, in some embodiments of this application, the privacy level of the target data may be related to the semantic meaning of the target data. The privacy level of the target data may alternatively be related to other data. This is not limited herein.

For example, the other data may be instructions of a user or a third-party application, time validity of the target data, a source user/account of the target data, an electronic device type of the electronic device, a context of the target data when a source of the target data is a voice, or the like.

It may be understood that the source user/account of the target data may affect the privacy level of the target data, so as to further enhance privacy difference protection of the target data.

Optionally, in some embodiments of this application, the privacy level of the target data may be directly determined based on a keyword and a trigger word. The keyword or the trigger word is, for example, "set a high privacy level", "set to private data", "surprise", "confidential", or the like.

The following uses content shown in Table 1 as an example to describe an example schematic diagram of a privacy level and a presentation manner.

Table 1 is an example schematic table of a correspondence between a privacy level, a semantic meaning, and a presentation manner according to an embodiment of this application.

**Table 1**

| Privacy level | Semantic meaning | Presentation manner | |
|---|---|---|---|
| | | Verification manner | Display manner |
| None | None | No restriction | No restriction |
| Low | Multi-person, regular activity, record, or the like | Any verification manner | Voice broadcast, text display, cloud synchronization, or the like |
| Medium | Conference, itinerary, or the like | Fingerprint verification | Voice broadcast and text display |
| High | Relating to personal property, personal safety, or the like | Fingerprint verification + at least one of other verification | Text display |
| Very | Directly impacting | Fingerprint verification + | Text display |
| high | personal property, personal safety, or the like | password verification + at least one of other verification | |

The privacy level may be classified into two levels (yes or no) or more levels. For example, five levels in Table 1: none, low, medium, high, and very high.

As shown in Table 1, when the target data is information related to a plurality of persons, a regular activity, a record, and the like, the privacy level of the target data is low, a verification manner of the target data whose privacy level is low is any verification manner, and a display manner of the target data whose privacy level is low includes voice broadcast, text display, cloud synchronization, and the like. When the target data is information like a conference or an itinerary, the privacy level of the target data is medium, a verification manner of the target data whose privacy level is medium is fingerprint verification, and a display manner of the target data whose privacy level is medium is voice broadcast or text display. When the target data is information related to personal property, personal safety, or the like, the privacy level of the target data is high, a verification manner of the target data whose privacy level is high is fingerprint verification and at least one of other verification, and a display manner of the target data whose privacy level is high is text display. When the target data is information that directly affects personal property, personal safety, or the like, the privacy level of the target data is very high, a verification manner of the target data whose privacy level is very high is fingerprint verification, password verification and at least one of other verification, and a display manner of the target data whose privacy level is very high is text display.

It should be noted that Table 1 is merely an example table of a correspondence between a privacy level, a semantic meaning, and a presentation manner, and may further include other different correspondences. For example, the privacy level may be classified into more levels or fewer levels. For another example, the display manner in the presentation manner further includes another display manner.

It should be noted that mapping relationships between the privacy level and the presentation manner on different electronic devices may be different. For example, a same privacy level on electronic devices of different device types may correspond to different presentation manners. It may be understood that, because presentation manners supported by different electronic devices may not be completely consistent, different electronic devices may have different mapping relationships between the privacy level and the presentation manner.

### (b) Manner of determining the privacy level

### (i) Determine the privacy level of the target data based on the semantic meaning of the target data

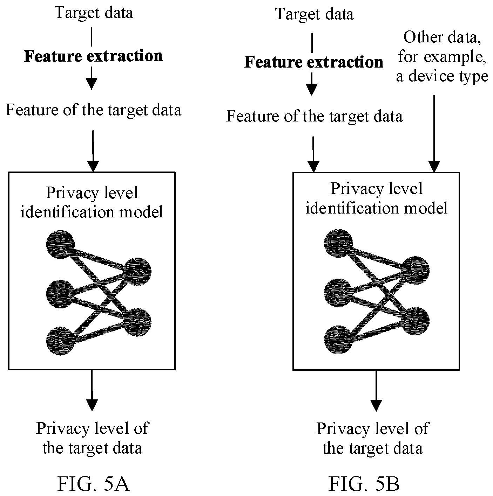

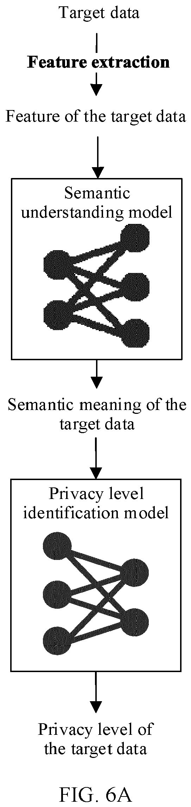

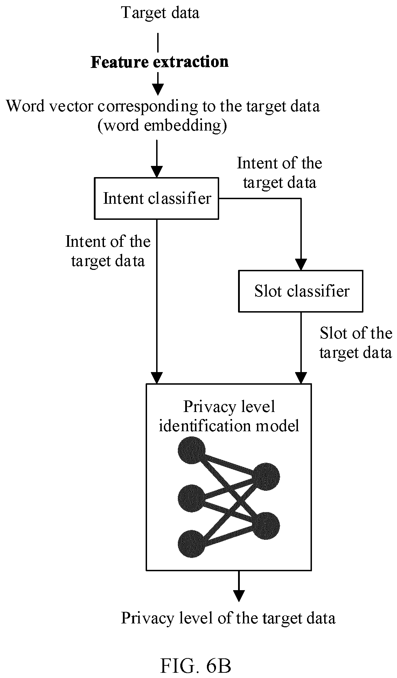

With reference to content shown in FIG. 5A, FIG. 5B, FIG. 6A, and FIG. 6B, the following describes an example of a method for determining a privacy level of target data.

FIG. 5A and FIG. 5B each are an example schematic diagram of determining a privacy level of target data according to an embodiment of this application.

As shown in FIG. 5A, first, after the target data is obtained, a feature of the target data may be extracted. The feature of the target data may be extracted by using a plurality of methods. This is not limited herein. For example, a feature extraction model may be established by using a BERT model, an LSTM model, or a CNN model, so as to extract the feature of the target data.

It may be understood that the feature of the target data is extracted, so that a calculation amount of subsequent processing can be reduced, and a processing speed can be increased.

Second, the feature of the target data or the target data is input into a privacy level identification model, to determine the privacy level of the target data. For content of the privacy level identification model, refer to the foregoing text description corresponding to FIG. 1A. Details are not described herein again.

Alternatively, as shown in FIG. 5B, the input of the privacy level identification model may further include other data, for example, other data like a device type and a source user/account of the raw data corresponding to the target data.

When the input of the privacy level identification model includes the device type, same target data has different privacy levels in devices of different device types. When the input of the privacy level identification model includes the device type, the privacy level of the target data may be different values for different access users/accounts.

For example, when the electronic device is a public device, the electronic device obtains the target data, and determines the privacy level of the target data as a privacy level 1. When the electronic device is a private device, the electronic device obtains the same target data, and determines the privacy level of the target data as a privacy level 2. The privacy level 2 is higher than or equal to the privacy level 1. Security of a presentation manner corresponding to the privacy level 2 is higher than security of a presentation manner corresponding to the privacy level 1.

The public device is a device that is mainly used by a plurality of persons. Correspondingly, the private device is a device that is mainly used by a single person. For example, a smart television and a conference device are public devices. For another example, when information about a plurality of accounts is configured on the electronic device, the electronic device may be a public device.

It is clear that when the user inputs the target information into the public device, there is a high probability that the target data is used for sharing, and the electronic device does not need to use a very strong protection manner, that is, does not need to configure a high privacy level for the target data.

Optionally, in some embodiments of this application, the electronic device may receive target data or raw data sent by another electronic device, and after determining the target data, determine a privacy level of the target data based on a device type of the another electronic device and the target data.

Optionally, in some embodiments of this application, the electronic device may receive target data or raw data sent by another electronic device, and after determining the target data, determine a privacy level of the target data based on a device type of an electronic device that receives the target data or the raw data for the first time and the target data.

Optionally, in some embodiments of this application, the electronic device may receive target data or raw data sent by another electronic device. After determining the target data, the electronic device may determine a privacy level of the target data based on a device type of the electronic device and the target data.

Optionally, in some embodiments of this application, the electronic device may receive target data and a privacy level of the target data that are sent by another electronic device, and then directly determine the privacy level of the target data.

Further, optionally, in some embodiments of this application, when the electronic device is a public device, the privacy level may be related to the source user/account of the raw data corresponding to the target data.

For example, a privacy level of target data input by a user 1 for the user 1 is the privacy level 1, and a privacy level of the target data for a user 2 is the privacy level 2. A value of the privacy level 2 may be different from a value of the privacy level 1.

For another example, for a public device of a company, for example, a server, the public device may receive weekly work arrangements and work progress of a plurality of departments in the company. For employees in a department A, a privacy level of the weekly work arrangement of the department A is the privacy level 1. For employees in a department B, the privacy level of the weekly work arrangement of the department A is the privacy level 2. The privacy level 2 is higher than the privacy level 1.

In this case, the employees in the department A can easily view the weekly work arrangement of the department A, and the employees in the department B need to pass some verification to view the weekly work arrangement of the department A.

FIG. 6A and FIG. 6B each are another example schematic diagram of determining a privacy level of target data according to an embodiment of this application.

Optionally, as shown in FIG. 6A, in some embodiments of this application, after the feature of the target data is determined, the semantic meaning of the target data may be determined based on a semantic understanding model and the feature of the target data, and then the privacy level of the target data is determined based on the semantic meaning of the target data and the privacy level identification model.

It may be understood that the semantic meaning of the target data, as one of the features of the target data, is more suitable for determining the privacy level of the target data. Because a quantity of selected features of the target data is reduced, a calculation amount can be further reduced, and a processing speed can be improved.

The semantic meaning may be represented by using an intent (intent) and a slot (slot), or may be represented by using a domain (domain), an intent, and a slot. The semantic meaning may also be represented by using a vector. The semantic meaning may further be represented by using a logic form (logic form). This is not limited herein.

The following mainly describes an example of a manner of determining a privacy level by using an intent and a slot as an example of a semantic meaning.

Optionally, as shown in FIG. 6B, in some embodiments of this application, the feature of the target data may be a word vector (word embedding) corresponding to the target data. Then, an intent of the target data and a slot in the intent are determined based on the word vector corresponding to the target data, and the privacy level of the target data is determined based on the intent of the target data, the slot, and the privacy level identification model.

A semantic meaning of one piece of target data corresponds to one or more intents, and one intent corresponds to at least one slot. Whether one piece of target data corresponds to one intent or a plurality of intents may depend on implementation of an intent classifier.

For example, when the target data is "I'll go to a place A at 10:00 tomorrow morning", it is first determined that the intent of the target data may be "Itinerary", and then the semantic understanding model determines that slots of "Itinerary" include "Destination:", "Departure place:", "Time:", "Transportation means:", and the like. Then, determining, based on a slot classifier, a slot of "I'll go to a place A at 10:00 tomorrow morning" includes: determining that a value of "Destination:" is "Place A", and determining that a value of the slot "Time:" is "10:00 tomorrow morning".

Values of "Departure place:" and "Transportation means:" are not determined.

It should be noted that a mapping relationship between the intent, the slot, and the privacy level may be determined by using the privacy level identification model. Alternatively, optionally, in some embodiments of this application, the electronic device stores a table that can be updated with a cloud in real time, and there is a correspondence between the intent, the slot, and the privacy level that is stored in the table.

Table 2 is an example schematic table of a relationship between an intent, a slot, and a privacy level according to an embodiment of this application.

**Table 2**

| Intent (slot) | Privacy level |
|---|---|
| Store an itinerary/itinerary (a common place, for example, a school or a hotel) | A |
| Store an itinerary/itinerary (a special place, for example, a hospital) | Higher than A |
| Store personal information/personal information (information that is not related to property security, for example, a height, a weight, and a birthplace). | B (A and B are different values) |
| Store personal information/personal information (information that is related to property security, for example, an ID card number and a payment account) | Higher than B |
| Store conference information/Conference information () | Lower than A and lower than B |
| Music () | None |

As shown in Table 2, target data with different intents may correspond to different privacy level. Alternatively, further, target data with a same intent but different slots may correspond to different privacy levels.

As shown in Table 2, when the intent (slot) of the target data is to store an itinerary/itinerary (a common place, for example, a school or a hotel), the privacy level of the target data is A; or when the intent (slot) of the target data is to store an itinerary/itinerary (a special place, for example, a hospital), the privacy level of the target data is higher than A. In other words, target data with a same intent may have different privacy levels.

As shown in Table 2, when the intent (slot) of the target data is to store personal information/personal information (information that is not related to property security, for example, a height, a weight, and a birthplace), the privacy level of the target data is B. In other words, target data with different intents may have different privacy levels. When the intent (slot) of the target data is to store personal information/personal information (information that is related to property security, for example, an ID card number and a payment account), the privacy level of the target data is higher than B.

It should be noted that not all semantic meanings have corresponding privacy levels, that is, some target data may have no privacy level. For example, when an intent of the target data 1 is music, the privacy level of the target data 1 is none, and it may be considered that the target data 1 has no privacy level.

It is clear that, higher confidence of the determined semantic meaning of the target data indicates a more accurate privacy level that is of the target data and that is determined based on the semantic meaning of the target data. Therefore, optionally, in some embodiments of this application, the confidence of the determined semantic meaning of the target data may be further improved by using other information like a context, so that the determined privacy level is more accurate.

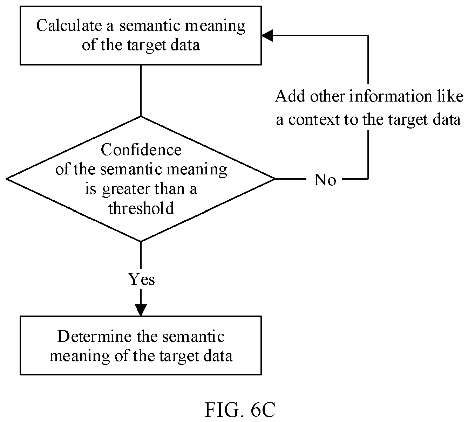

FIG. 6C is another example schematic diagram of determining a privacy level of target data according to an embodiment of this application.

As shown in FIG. 6C, the semantic meaning of the target data is first calculated, and then whether the confidence of the semantic meaning is greater than a threshold is determined. The confidence indicates a degree of trustworthiness or accuracy of the semantic meaning. If the confidence of the semantic meaning is greater than the threshold, it is determined that a calculated semantic meaning is the semantic meaning of the target data; or if the confidence of the semantic meaning is less than the threshold, other information like a context is added to the target data, and then the semantic meaning of the target data is recalculated, until the confidence of the semantic meaning is greater than the threshold or no other data that can increase the confidence of the semantic meaning can be added to a process of calculating the semantic meaning of the target data.

Optionally, in some embodiments of this application, when a semantic meaning is represented by an intent and a slot, confidence of the intent and/or the slot may be used as the confidence of the semantic meaning.

### (ii) Directly determine the privacy level of the target data

Optionally, in some embodiments of this application, according to the data protection method provided in embodiments of this application, an interface may be provided for a third-party application, to receive data provided by the third-party application, and determine a privacy level of the data. Alternatively, the third-party application may directly specify the privacy level of the data by using the interface. The data may include the target data.

When the target data is from the third-party application, the privacy level of the target data may be determined by the third-party application. For example, an interface between the third-party application and an operating system is SendPrivacy (text, rank), where text is the target data, and rank is the privacy level of the target data.

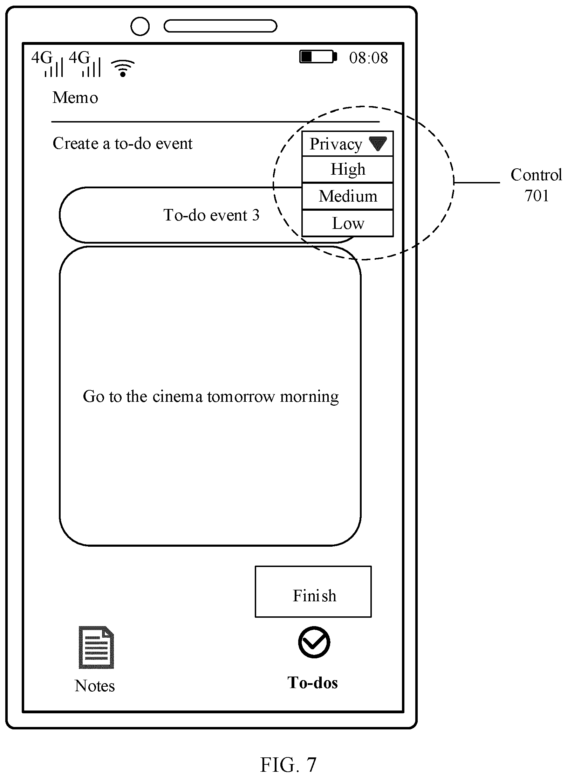

Alternatively, as shown in FIG. 7, the privacy level of the target data may be directly determined in response to interaction with the user.

FIG. 7 is an example schematic diagram of determining a privacy level of target data according to an embodiment of this application.

As shown in FIG. 7, an interface of a memo includes a control 701, and the control 701 is configured to determine a privacy level of a to-do event. For example, the user taps different options in the control 701, and may select different privacy levels to configure the to-do event. The user taps "High" in the control 701, and configures a privacy level of the to-do event 3 to be high.

It should be noted that, in a scenario of the data protection method provided in embodiments of this application, an application is not limited to a memo, and may be another application that can record other information like itinerary information and identity information. The control used to configure the privacy level is not limited to a form of the control 701 shown in FIG. 7.

### (iii) Determine a time identifier of the target data

Optionally, in some embodiments of this application, the time identifier of the target data may be further determined. The time identifier of the target data indicates time validity of the data, and the time identifier of the target data corresponds to at least one moment. When the target data has a time identifier, the privacy level of the target data may be a variable related to the time identifier.

For example, if a moment corresponding to the time identifier of the target data is T1, when a system time on the electronic device is later than T1, the privacy level of the target data is C, and when the system time is earlier than T1, the privacy level of the target data is greater than C.

Table 3 is an example schematic table of a time identifier according to an embodiment of this application.

**Table 3**

| Data | Time identifier |
|---|---|
| Text data, for example, "conference at 10:00 on Wednesday morning" | 2021/11/3 10:00 a.m. |
| Text data, for example, "ID card number 1234" | None |
| Text data, for example, "surprise, give Lisa a birthday party next Wednesday" | 2021/11/10 |
| Text data, for example, "November 10 is Lisa's birthday" | None |

As shown in Table 3, a time identifier of "conference at 10:00 on Wednesday morning" is "2021/11/3 10:00 a.m."; "ID card number 1234" has no time identifier; a time identifier of "surprise, give Lisa a birthday party next Wednesday" is "2021/11/10"; and "November 10 is Lisa's birthday" has no time identifier.

It should be noted that not all time information, for example, year, month, and day, in the text data is used as the time identifier of the text data, and the time identifier is used to indicate time validity in the text data. To be specific, a value of the text data to the user changes before and after a moment corresponding to the time identifier, that is, the privacy level of the target data changes before and after a moment corresponding to the time identifier. Therefore, as shown in Table 3, "November 10 is Lisa's birthday" has no time identifier.

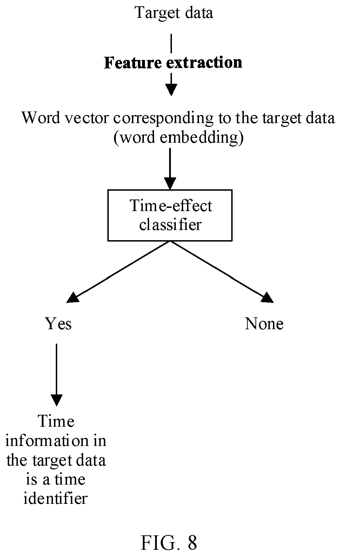

With reference to content shown in FIG. 8, the following describes an example of a method for determining a time identifier provided in an embodiment of this application.

FIG. 8 is an example schematic diagram of determining a time identifier according to an embodiment of this application.

As shown in FIG. 8, feature extraction is performed on the target data to obtain a word vector corresponding to the target data, and the word vector corresponding to the target data is input into a time-effective classifier. The time-effective classifier may determine whether the word vector corresponding to the target data has time validity. After determining that the word vector corresponding to the target data has time validity, the time-effective classifier uses the time information in the target data as the time identifier of the target data.

The time-effective classifier may be a binary classifier. If the time-effective classifier determines that the word vector corresponding to the input target data has time validity, the time-effective classifier uses the time information in the target data as the time identifier of the target data. If the time-effective classifier determines that the word vector corresponding to the input target data has no time validity, the time-effective classifier determines that the target data has no time validity, and has no time identifier.

Table 3 is merely an example schematic table in embodiments of this application, and constitutes no limitation on embodiments of this application. For example, if the validity classifier determines that "birthday" has time validity, "November 10 is Lisa's birthday" may also have a time identifier, for example, 2021/11/10.

S203: Optionally, determine a storage manner of the target data based on the privacy level of the target data.

Optionally, in some embodiments of this application, the storage manner of the target data may be determined based on the privacy level of the target data. The storage manner includes at least one of a storage area, an encryption manner, a storage format, and the like. This is not limited herein. After the storage manner of the target data is determined, the target data may be stored in a storage medium of the electronic device in the storage manner of the target data, for example, a random access memory (random access memory, RAM) or a read-only memory (read-only memory, ROM).

Optionally, in some embodiments of this application, the electronic device may periodically update the privacy level of the target data in the storage medium, or may update a privacy level of another target data each time the target data in the storage medium is read/written. For example, the privacy level of the target data is updated based on a relationship between a time corresponding to the time identifier and a system time on the electronic device. In addition, the storage area of the target data on the storage medium may be adjusted after the privacy level of the target data is updated.

Optionally, in some embodiments of this application, the semantic meaning of the target data may be stored in the storage medium. For example, the target data 1 is "record my ID card number, 1234", and a semantic meaning of the target data 1 may be "ID card number: 1234". In this case, the semantic meaning of the target data 1 may be stored in the storage medium, thereby reducing an amount of stored data.

### (a) Correspondence between the privacy level and the storage area

Target data with different privacy levels may be stored in different areas of the storage medium of the electronic device.

As described above in FIG. 1B, the storage medium of the electronic device is divided into a plurality of storage areas, including a storage area 1, a storage area 2, a storage area 3, and the like. The storage area 1 is used to store target data whose privacy level is a, the storage area 2 is used to store target data whose privacy level is b, and the storage area 3 is used to store target data whose privacy level is c.

It should be noted that one storage area may be correspondingly used to store target data of a plurality of privacy levels, or target data of a plurality of privacy levels may be stored in a same storage area.

It may be understood that the correspondence between the privacy level and the storage area can improve a speed at which the electronic device stores the target data and reads the target data. For example, if a request 1 is used to request target data 1 whose privacy level is a, the electronic device may search the storage area 1 for the target data 1, to quickly find the target data 1.

### (b) Correspondence between the privacy level, the storage format, and the encryption manner

First, different privacy levels may correspond to different storage formats. For example, the storage format may be "*privacy level*target data" and the like.

Second, different privacy levels may correspond to different encryption manners. For example, as described above in FIG. 1B, an encryption manner corresponding to the privacy level a is an encryption manner 1, an encryption manner corresponding to the privacy level b is an encryption manner 2, and an encryption manner corresponding to the privacy level c is no encryption.

It may be understood that for target data with a high privacy level, only encrypted target data can be read by directly reading a physical address through a system vulnerability by using other software. This can effectively prevent leakage of the target data. For target data with a low privacy level, no encryption may be performed. This can reduce calculation overheads of the electronic device.

S204: Determine a presentation manner of the target data based on the privacy level of the target data.

After the privacy level of the target data is determined, the presentation manner of the target data is determined based on the privacy level of the target data. The presentation manner includes a display manner and/or a verification manner.

As described above in FIG. 1A, different privacy levels correspond to different display manners. For example, privacy levels of target data 1 and target data 2 are a, a corresponding display manner of target data whose privacy level is a is text display or voice broadcast, and a verification manner is no verification. A privacy level of target data 3 is b, a corresponding display manner of target data whose privacy level is b is text display or voice broadcast, and a verification manner is any verification manner. Privacy levels of the target data 4 and target data 5 are c, a corresponding display manner of target data whose privacy level is c is text display, and there are at least two verification manners.

Optionally, after an access request is received, the display manner of the target data may be determined based on the privacy level of the target data. The access request is a request for obtaining the target data.

The display manner includes text display, voice broadcast, cloud synchronization, and the like.

The verification manner includes fingerprint verification, face verification, iris verification, voiceprint verification, password verification, and the like. It should be noted that the verification manner is related to a verification capability supported by the electronic device. For example, a smart speaker may support password authentication and voiceprint authentication. For another example, a mobile phone may support fingerprint authentication, voiceprint authentication, face authentication, password authentication, and iris authentication.

It should be noted that, target data with a higher privacy level has a more secure presentation manner of the target data. For example, security of text display is higher than security of voice broadcast, security of fingerprint authentication and voiceprint authentication is higher than security of separate fingerprint authentication, and security of iris authentication is higher than security of password authentication (a quantity of passwords is four).

In an embodiment of this application, when the electronic device stores the semantic meaning of the target data in the storage medium, data used for presentation is the semantic meaning of the target data, or data used for presentation is data generated based on the semantic meaning of the target data and a natural language generation (natural language generation, NLG) method.

In an embodiment of this application, when the electronic device directly stores the target data in the storage medium, data used for presentation may be the target data.

Considering that an initiator of the access request is a third-party application, after the third-party application obtains the target data, the target data may be used only to complete some functions, and the target data is not presented to the user.

Optionally, in some embodiments of this application, different privacy permission may be configured for different third-party applications, and a value relationship between the privacy permission and the privacy level of the target data is determined, so that whether to return the target data to the third-party application is determined.

It may be understood that different privacy permission is configured for different third-party applications, so that security of the target data can still be protected when the target data is not displayed and the user is not verified. This improves user experience.

S205: Present the target data in the determined presentation manner.

After the presentation manner is determined, and the request for the target data is received, the target data may be presented in the determined presentation manner.

Different target data corresponds to different privacy levels, different privacy levels correspond to different presentation manners, and security of different presentation manners is different. Therefore, different target data has different presentation manners, so that the target data can be differentially protected.

That security of different presentation manners is different mainly includes: From a perspective of the display manner, security of text display is higher than security of voice broadcast; and from a perspective of the verification manner, security of a plurality of same or different verification manners is higher than security of one verification manner, and security of different verification manners is different. For example, security of password authentication (a quantity of passwords is four) is lower than security of iris authentication, and the like.

It may be understood that, according to the data protection method provided in this application, a privacy level of target data may be automatically determined first, and then different presentation manners of different target data are determined, so that differentiated protection is provided for different target data, data security of a user is fully protected, and user experience is improved.

### (2.2) Data procedure of the data protection method provided in embodiments of this application

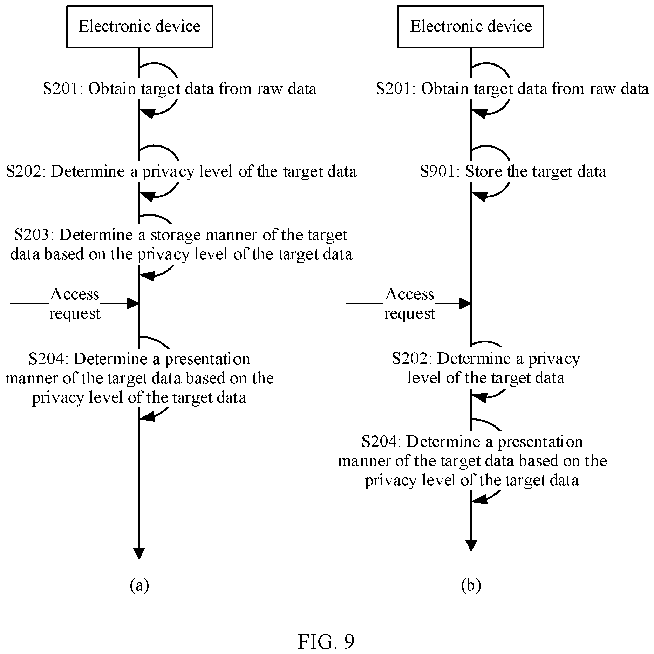

FIG. 9 is an example schematic diagram of a procedure of a data protection method according to an embodiment of this application.

As shown in (a) in FIG. 9, in some embodiments of this application, a procedure in which the electronic device implements the data protection method includes the following four steps. S201: Obtain target data from raw data. S202: Determine a privacy level of the target data. S203: Determine a storage manner of the target data based on the privacy level of the target data. S204: Determine a presentation manner of the target data based on the privacy level of the target data.

As shown in (b) in FIG. 9, optionally, in some embodiments of this application, a procedure in which the electronic device implements the data protection method includes the following four steps. S201: Obtain target data from raw data. S901: Store the target data. S202: Determine a privacy level of the target data. S204: Determine a presentation manner of the target data based on the privacy level of the target data.

It can be determined by comparing (a) and (b) in FIG. 9 that the electronic device may determine the privacy level of the target data after obtaining the target data, or may determine the privacy level of the target data only after receiving an access request for the target data. In addition, in (b) in FIG. 9, before receiving the access request for the target data, the electronic device temporarily does not determine the privacy level of the target data, and therefore can only store the target data first. In this case, different target data may be stored in a same manner.

It may be understood that, after the access request is received, the privacy level of the target data corresponding to the access request is determined, so that a quantity of target data whose privacy level needs to be determined can be reduced, thereby reducing a calculation amount of the electronic device, and implementation is simple.

It may be understood that, after the target data is determined, the privacy level of the target data is determined, and the storage manner of the target data is further determined, so that the target data having the privacy level can be better protected. In addition, after the access request is received, there is no need to spend time calculating the privacy level of the target data corresponding to the access request, and the presentation manner of the target data can be directly determined. This improves a response speed of the electronic device.

### (2.3) Scenarios of the data protection method provided in embodiments of this application

### (a) Scenario 1: The user saves and reads the target data through a voice.

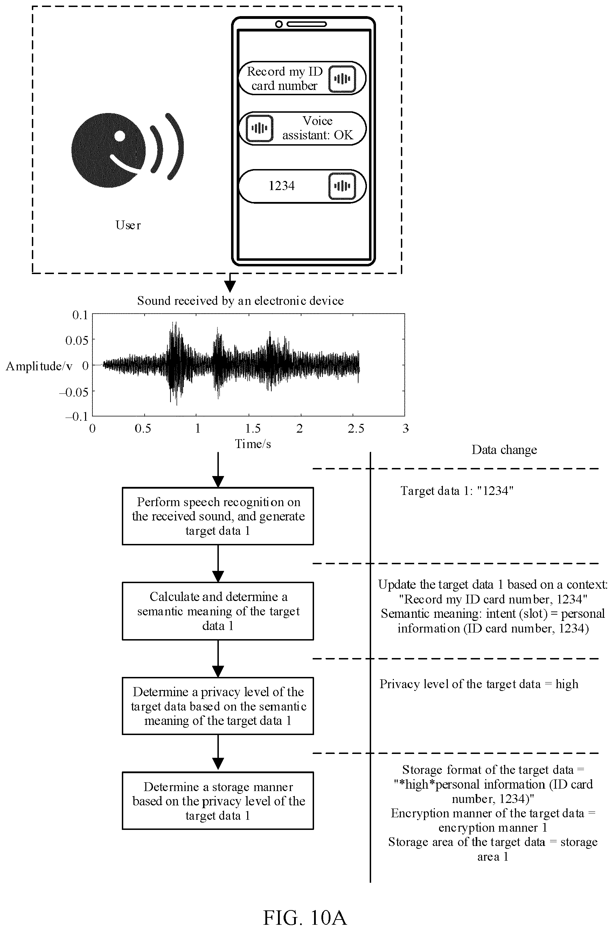

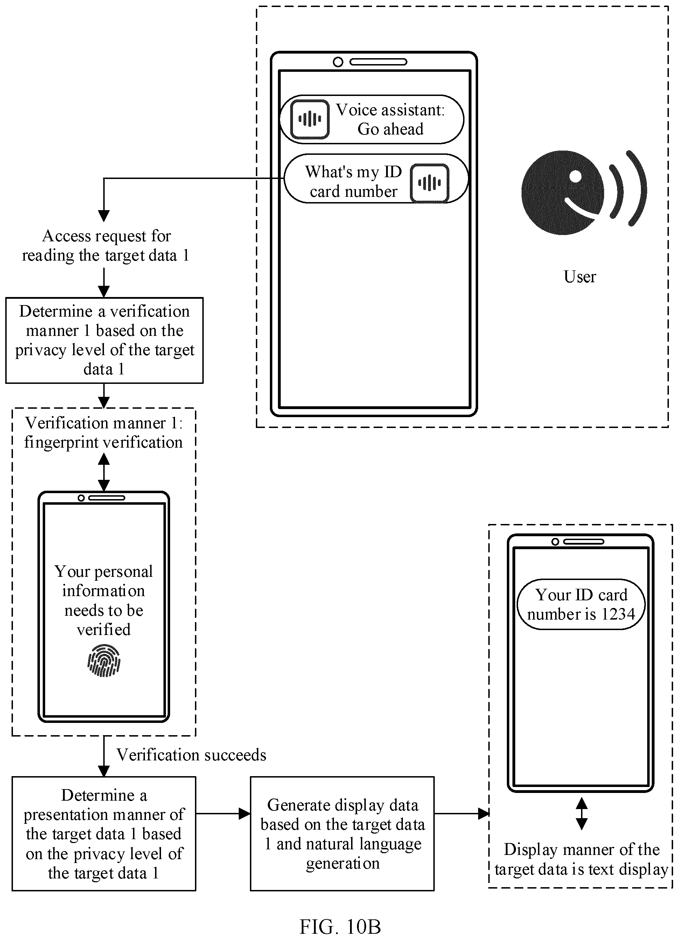

FIG. 10A and FIG. 10B each are an example schematic diagram of a data protection method in a voice scenario according to an embodiment of this application.

As shown in FIG. 10A, content of interaction between the user and a voice assistant of the electronic device includes a voice 1 "record my ID card number" of the user, a response "OK" of the voice assistant, and a voice 2 "1234" of the user. The voice 2 of the user is the raw data in this embodiment of this application.

Corresponding to step S201, after receiving the voice 2 of the user, the electronic device first converts the voice 2 of the user into corresponding text data based on speech recognition, and the text data is "1234". The text data "1234" is the target data.

Corresponding to step S202, after the target data is determined, a semantic meaning of the target data "1234" is first determined. As shown in FIG. 6C, because the target data "1234" includes little information, and the determined confidence of the semantic meaning is less than the threshold, the context is added to the target data, and the target data is changed to "record my ID card number, 1234".

Then, a semantic meaning of the target data "record my ID card number, 1234" is determined, and it is determined that confidence of the semantic meaning is greater than the threshold. The semantic meaning of the target data is "personal information (ID card number, 1234)".

Finally, after the semantic meaning of the target data is determined, the privacy level of the target data is determined based on the semantic meaning of the target data. For example, the privacy level of the target data "record my ID card number, 1234" is high.

Corresponding to step S203, the storage format of the target data is "*high*personal information (ID card number, 1234)", the encryption manner of the target data is the encryption manner 1, and the storage area of the target data is the storage area 1. Then, the target data is stored in the storage medium of the electronic device based on the storage format, the storage area, and the encryption manner of the target data.

FIG. 10B is an example schematic diagram of requesting target data according to an embodiment of this application.

As shown in FIG. 10B, the content of interaction between the user and the voice assistant of the electronic device includes "Go ahead" of the voice assistant and a voice 3 "what is my ID card number" of the user.

First, the electronic device determines that a semantic meaning of the voice 3 "what is my ID card number" of the user is to request the ID card number of the user, that is, the voice 3 is the access request in this embodiment of this application. Then, the electronic device determines that the target data corresponding to the access request is the target data 1.

Corresponding to step S204, it is determined, based on the privacy level of the target data 1, that a verification manner of the target data 1 is a verification manner 1. The verification manner 1 may be fingerprint verification. After the verification succeeds, it is determined, based on the privacy level of the target data, that the display manner of the target data is text display. Then, the electronic device generates, based on "*high*personal information (ID card number, 1234)" and the natural language generation method, data used for presentation. The data used for presentation is "Your ID card number is 1234", and is presented on a screen of the electronic device in a text manner.

Alternatively, "*high*personal information (ID card number, 1234)" or "personal information (ID card number, 1234)" may be directly presented.

It may be understood that, with reference to content shown in FIG. 10A and FIG. 10B, the data protection method provided in embodiments of this application is implemented, so that privacy protection for data including voice data can be implemented, and user experience can be improved.

FIG. 10C-1 to FIG. 10C-3 are another example schematic diagram of a data protection method in a voice scenario according to an embodiment of this application.

As shown in FIG. 10C-1 to FIG. 10C-3, the user may save data by using the voice assistant. For example, on August 12, the content of interaction between the user and the voice assistant includes a voice 1 "set a reminder: August 25 is my daughter's birthday, and I want to prepare a surprise for her" of the user and a response "OK" of the voice assistant.

A text corresponding to the voice 1 is the target data in this embodiment of this application, the time identifier of the target data is August 25, and the privacy level of the target data is a time-related variable. For example, the privacy level may be the following (on August 25 and before August 25, the privacy level of the target data is high; and after August 25, the privacy level of the target data is low).

After the privacy level of the target data is determined, the target data "set a reminder: August 25 is my daughter's birthday, and I want to prepare a surprise for her" may be stored in a storage manner determined by using the privacy level, or a semantic meaning, for example, "birthday (daughter, August 25)", of the target data may be stored in a storage manner determined by using the privacy level.

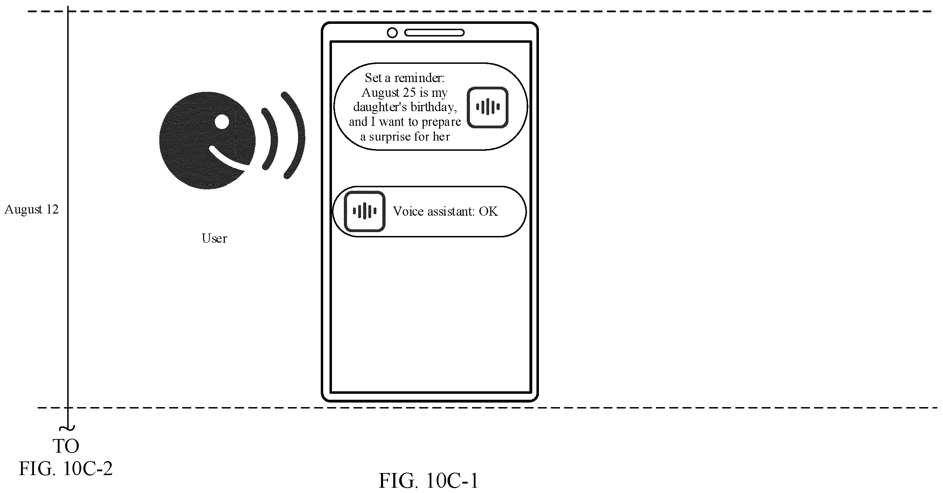

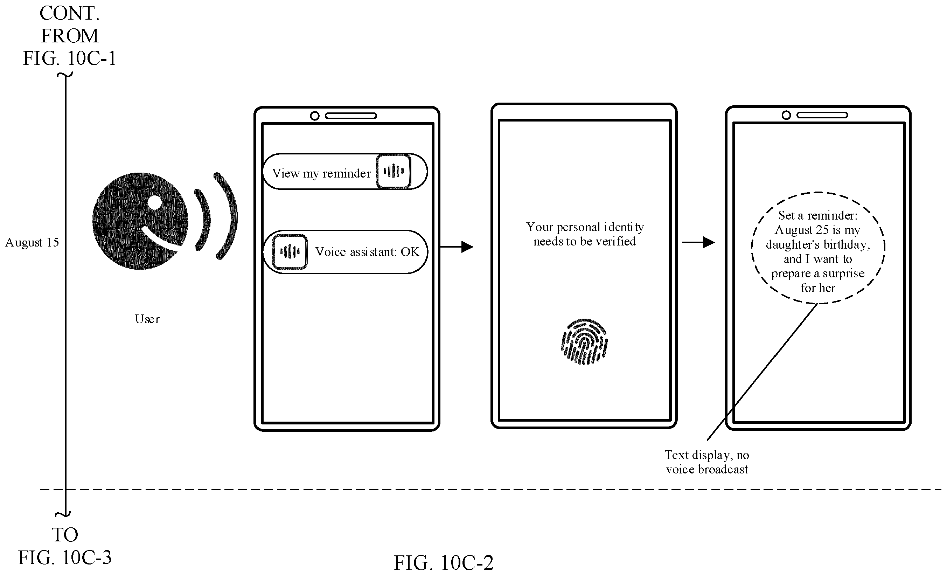

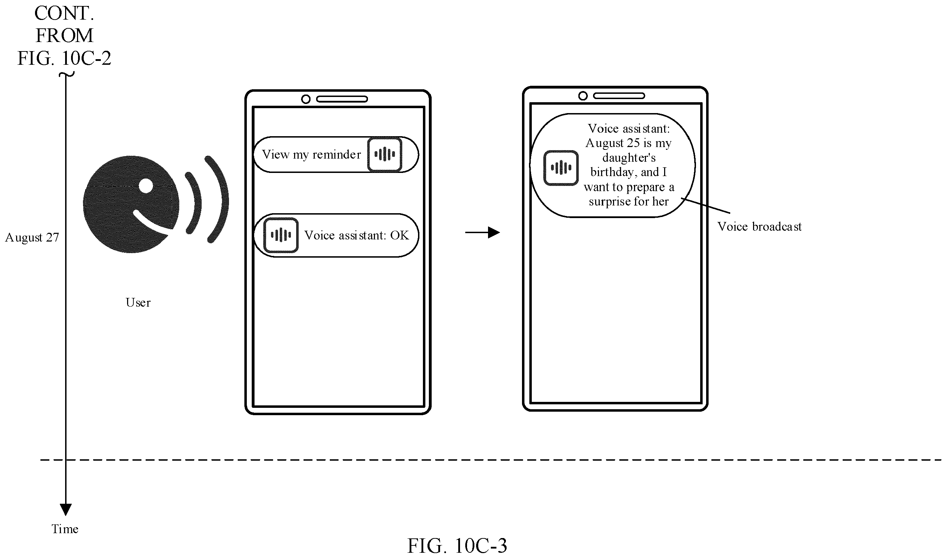

On August 15, the user may query data that is previously saved by using the voice assistant. For example, the content of interaction between the user and the voice assistant includes a voice 2 "view my reminder" of the user, a response of the voice assistant including "OK", and user identity verification, for example, fingerprint verification in FIG. 10C-2. After the fingerprint verification succeeds, the voice assistant displays "set a reminder: August 25 is my daughter's birthday, and I want to prepare a surprise for her" in a text display manner".

On August 27, the user may query a request that is previously saved by using the voice assistant. For example, the content of interaction between the user and the voice assistant includes the voice 2 "view my reminder" of the user and a response "August 25 is my daughter's birthday, and I want to prepare a surprise for her" of the voice assistant. "August 25 is my daughter's birthday, and I want to prepare a surprise for her" may be voice broadcast and text display.

Before the target data is presented, natural language generation may be performed on the saved data, so that the content presented by the electronic device to the user better complies with a natural language rule. For example, if the saved data is "birthday (daughter, August 25)", in a process of presenting the target data, the data used for presentation, for example, "August 25 is your daughter's birthday", may be generated based on "birthday (daughter, August 25)" by using the natural language generation method. Alternatively, if the saved data is "August 25 is my daughter's birthday, and I want to prepare a surprise for her", the data used for presentation may be "August 25 is your daughter's birthday, and you want to prepare a surprise for her", or the like. Therefore, the data used for presentation may be the same as or different from the saved target data. This is not limited herein.

Because the privacy level of the target data changes before and after August 25, and different privacy levels correspond to different presentation manners, after the user views the reminder in a same manner on August 17 and August 27, the electronic device has different presentation manners.

FIG. 10D and FIG. 10E each are another example schematic diagram of a data protection method in a voice scenario according to an embodiment of this application.

As shown in FIG. 10D and FIG. 10E, a mobile phone may be used as a private device, and a smart television may be used as a public device.

As shown in FIG. 10D, the user may save data by using the voice assistant on the mobile phone. For example, the content of interaction between the user and the voice assistant includes a voice 1 "record my itinerary to Beijing at 8:00 tomorrow" of the user and a response "OK" of the voice assistant.

A text corresponding to the voice 1 is the target data in this embodiment of this application, and the privacy level of the target data is medium. After the privacy level of the target data is determined, the target data "record my itinerary to Beijing at 8:00 tomorrow" may be stored in a storage manner determined by using the privacy level; or a semantic meaning, for example, "itinerary (destination: Beijing, time: 8:00 tomorrow)", of the target data may be stored in a storage manner determined by using the privacy level. A presentation manner of target data whose privacy level is medium is text display.

The user may query data that is previously saved by using the voice assistant. For example, the content of interaction between the user and the voice assistant includes a voice 2 "view my itinerary" of the user and a response of the voice assistant including text display "arrive Beijing at 8:00 tomorrow".

As shown in FIG. 10E, different from FIG. 10D, the user saves data by using the voice assistant on the smart television. For example, the content of interaction between the user and the voice assistant includes a voice 1 "record my itinerary to Beijing at 8:00 tomorrow" of the user and a response "OK" of the voice assistant.

A text corresponding to the voice 1 is the target data in this embodiment of this application, and the privacy level of the target data is low. A presentation manner of target data whose privacy level is low is voice broadcast and text display.

The user may query data that is previously saved by using the voice assistant. For example, the content of the interaction between the user and the voice assistant includes a voice 2 "view my itinerary" of the user and a response of the voice assistant, that is, voice-broadcasting "arrive Beijing at 8:00 tomorrow", and text-displaying "arrive Beijing at 8:00 tomorrow".

It should be noted that, it may be understood by comparing FIG. 10E with FIG. 10D, that a type of the electronic device, for example, a private device and a public device, may affect the privacy level of the target data.

Optionally, in some embodiments of this application, the mobile phone may alternatively be used as a public device, and the smart television may alternatively be used as a private device. This is not limited herein.

### (b) Scenario 2: The user saves and reads the target data in a memo application/a calendar application and the like.

As shown in FIG. 7, the user may save information like itinerary information, identity information, and the like to the to-do event in the memo or another application. Alternatively, the user may save the information in the memo or another application by using the voice assistant. All the information may be the target data or the raw data in embodiments of this application.

Corresponding to step S201 and step S202, after determining the target data, the electronic device determines the privacy level of the target data. Content of a to-do event 2 and the content of the to-do event 3 are the target data. A privacy level of the to-do event 2 is high, and a privacy level of the to-do event 3 is low.

FIG. 11A and FIG. 11B each are another example schematic diagram of requesting target data according to an embodiment of this application.

As shown in FIG. 11A, the user may open the memo to view the saved to-do event. An interface of the memo includes controls corresponding to different to-do events. For example, a control corresponding to the to-do event 3 is a control 1102, and a control corresponding to the to-do event 2 is a control 1101.

In response to interaction of the user with the control 1102, the electronic device determines whether to respond to a request for reading the target data. As an initiator of the request, the memo application has high privacy permission, and the privacy level of the target data is low. Therefore, when the privacy level of the target data is lower than or equal to the privacy permission of the memo, the memo can obtain the target data.

Corresponding to step S204, because the privacy level of the to-do event 3 is low, the content of the to-do event 3 may be directly presented without verification.

As shown in FIG. 11B, when the privacy level of the to-do event 2 is high, the electronic device determines whether to respond to the request for reading the target data. As an initiator of the request, the memo application has high privacy permission, and the privacy level of the target data is high. Therefore, when the privacy level of the target data is lower than or equal to the privacy permission of the memo, the memo can obtain the target data.

The electronic device determines, based on the privacy level of the to-do event 2, that the verification manner is fingerprint verification, and presents the content of the to-do event 2 after the verification succeeds.

### (c) Scenario 3: The electronic device reminds the user of the target data in a notification bar based on the time identifier.

When the target data has a time identifier, the user may be reminded one or more times when the system time is close to a moment of the time identifier. That the system time is close to the moment of the time identifier includes that a period between the system time and the moment of the time identifier is less than a time threshold. The time threshold may be preconfigured. For example, the time threshold may be a same day, three hours in advance, or the like. This is not limited herein.

FIG. 12A and FIG. 12B each are another example schematic diagram of requesting target data according to an embodiment of this application.

As shown in FIG. 12A and FIG. 12B, the notification bar of the electronic device includes one or more notifications (Notification), and the one or more notifications include a notification 1201 and a notification 1202. The notification 1201 corresponds to a to-do event 3, and a privacy level of the to-do event 3 is high. The notification 1202 corresponds to a to-do event 2, and a privacy level of the to-do event 2 is low.

When the period between the system time and the moment of the time identifier of the target data is less than the time threshold, the electronic device displays the notification 1201 and the notification 1202 on the screen to remind the user to view the target data.

Because the privacy level of the to-do event corresponding to the notification 1201 is high, and a verification manner corresponding to the high privacy level is not a verification-free manner, specific content of the to-do event 3 is not displayed in the notification bar.

Because the privacy level of the to-do event corresponding to the notification 1202 is low, and a verification manner corresponding to the low privacy level is a verification-free manner, specific content of the to-do event 2 may be displayed in the notification bar.

In response to tapping the notification 1201 by the user, the electronic device verifies the user in a verification manner corresponding to the privacy level of the to-do event 2, and presents the content of the to-do event 2 after the verification succeeds. The verification manner may be fingerprint verification.

In response to tapping the notification 1202 by the user, the electronic device directly presents the content of the to-do event 3.

### (d) Scenario 4: A privacy risk is reminded when the target data is used.

For example, the target data or data whose similarity with the target data is greater than a threshold is sent to another contact by using SMS or WeChat^{®}. The electronic device actively reminds the user that there is a risk of privacy leakage, and may verify the user based on the privacy level of the target data.

FIG. 13 is an example schematic diagram of privacy risk reminding according to an embodiment of this application.

As shown in FIG. 13, an interface of an SMS application includes an input field 1302 and a control 1301. The input field 1302 is configured to obtain content input by the user, for example, a text. The control 1301 is configured to send the edited content in the input field 1302.

When the content in the input field 1302 is the target data, or there is a high degree of overlapping between the content in the input field 1302 and the target data, the electronic device may remind the user that the to-be-sent information includes the target data, and there may be a risk of privacy leakage. In addition, the electronic device verifies the user in a verification manner like fingerprint verification, and sends the content in the input field 1302 after the user passes the verification.

Optionally, in some embodiments of this application, when the privacy level of the target data is higher than a privacy level threshold, and the information sent by the user includes the target data, or there is a high degree of overlapping between the information sent by the user and the target data, the electronic device reminds the user that the information sent by the user includes the target data, and there may be a risk of privacy leakage.

As shown in FIG. 13, the content in the input field 1302 includes "The ID card number is 1234", and the content is denoted as data 1. In response to tapping the control 1301 by the user, the electronic device may compare/match the data 1 with the target data stored in the electronic device. When the data 1 is the same as any piece of target data, or a similarity between the data 1 and any piece of target data is greater than a similarity threshold, a verification manner is determined based on the privacy level of the target data, and the content in the input field 1302 is sent only after the verification succeeds.

Whether the data 1 is the same as the target data may be determined by using a preset keyword, for example, by determining whether the target data and the data 1 have a same keyword. Alternatively, the electronic device may match a semantic meaning of the data 1 with the semantic meaning of the target data, and when a matching result is greater than a matching threshold, a similarity is greater than the similarity threshold. Alternatively, the electronic device determines an intent and a slot of the data 1, and then matches the intent and the slot of the data 1 with the intent and the slot of the target data based on the intent and the slot of the data 1, to determine whether a similarity between the target data and the data 1 is greater than the similarity threshold.

### (e) Scenario 5: A plurality of devices synchronize target data with different privacy levels.

When a plurality of electronic devices log in to a same account, an electronic device A in the plurality of electronic devices may synchronize target data whose privacy level is lower than "privacy level-synchronization" to the plurality of other electronic devices.

For example, if a value of "privacy level-synchronization" is high, target data whose privacy level is lower than high may be automatically synchronized to the other electronic devices logging in to the same account; and target data whose privacy level is higher than or equal to high may not be automatically synchronized to the other electronic devices logging in to the same account, and may be manually synchronized to the electronic device logging in to the same account.

Optionally, in some embodiments of this application, when the user manually synchronizes target data whose privacy level is greater than "privacy level-synchronization", the user needs to pass the verification, and the verification manner is related to the privacy level of the target data.

The value of the "privacy level-synchronization" may be preset, or may be updated with the cloud at any time. This is not limited herein.

It may be understood that different synchronization manners are selected for target data with different privacy levels, so that the target data can be fully protected. Only target data whose privacy level is lower than or equal to "privacy level-synchronization" is synchronized to other electronic devices, so that the user can view the target data on different electronic devices, and target data whose privacy level is higher than "privacy level-synchronization" is not automatically synchronized. This reduces a leakage risk of the target data.

After the target data is synchronized, if the synchronized content further includes the privacy level of the target data, the electronic device receiving the target data may determine the presentation manner based on the privacy level.

Optionally, in some embodiments of this application, a same privacy level on different electronic devices corresponds to different presentation manners. Alternatively, a same privacy level on different electronic devices corresponds to a same presentation manner.

After synchronizing the target data, the electronic device that receives the target data may re-determine the privacy level of the target data. Further, when the electronic device re-determines the privacy level of the target data, the electronic device may determine the privacy level of the target data based on a device type of an electronic device that obtains the target data for the first time and the target data. Alternatively, the electronic device determines the privacy level of the target data based on a device type of the electronic device and the target data. This is not limited herein.

### (f) Scenario 6: Different users view the target data.

For a plurality of verification manners including fingerprint verification, iris verification, and face verification, because one electronic device may store fingerprint information, iris information, face information, and the like of a plurality of users, privacy permission of different users may be further divided.

When the target data is from the user 1, and the privacy level of the target data is higher than "privacy level-user private", in a verification manner determined based on the privacy level of the target data, only verification information of the user 1 can pass the verification.

A value of "privacy level-user private" may be preset, or may be updated with the cloud at any time. This is not limited herein.

It may be understood that, when a source of the target data can be determined, and the privacy level of the target data is higher than "privacy level-user private", user information verified in the verification manner is a user that provides the target data, so that user privacy can be further ensured.

It should be noted that other scenarios derived from any combination of the scenario 1 to the scenario 6 are all scenarios of the data protection method provided in embodiments of this application, and are not limited to the scenario 1 to the scenario 6.

### (3) Hardware architecture and software architecture of the electronic device provided in embodiments of this application

FIG. 14 is an example schematic diagram of a hardware structure of an electronic device according to an embodiment of this application.

The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in this embodiment of this application.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the electronic device. In some other embodiments of this application, the electronic device may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present invention is merely an example for description, and does not constitute a limitation on a structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from a charger. The power management module 141 is configured to connect to the battery 142, the charging management module 140, and the processor 110.

A wireless communication function of the electronic device may be implemented by using the antenna 1, the antenna 2, the mobile communication module 150, the wireless communication module 160, the modem processor, the baseband processor, and the like. The mobile communication module 150 may provide a solution for wireless communication including 2G/3G/4G/5G and the like to be applied to the electronic device. The modem processor may include a modulator and a demodulator.

The wireless communication module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like and that is applied to the electronic device.

The electronic device implements a display function by using the GPU, the display 194, the application processor, and the like. The GPU is a microprocessor for image processing, and is connected to the display 194 and the application processor. The display 194 is configured to display an image, a video, and the like, for example, a teaching video and a user action picture video in embodiments of this application.

The ISP is configured to process data fed back by the camera 193. The camera 193 is configured to capture a static image or a video. In some embodiments, the electronic device may include one or N cameras 193, where N is a positive integer greater than 1.

The digital signal processor is configured to process a digital signal, and may process another digital signal in addition to the digital image signal. The video codec is configured to compress or decompress a digital video. The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device, for example, image recognition, facial recognition, speech recognition, and text understanding, may be implemented through the NPU.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is generally referred to as a DDR5 SDRAM), and the like. The non-volatile memory may include a magnetic disk storage device, a flash memory (flash memory), and the like. The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia Card, eMMC), and the like according to storage specifications. The random access memory may be directly read and written by using the processor 110. The random access memory may be configured to store an executable program (for example, machine instructions) in an operating system or another running program, and may be configured to store data of a user, data of an application, and the like. The non-volatile memory may also store an executable program, data of a user, data of an application, and the like, which may be loaded into the random access memory in advance for directly reading and writing by the processor 110.

The external memory interface 120 may be configured to connect to an external non-volatile memory, to extend a storage capability of the electronic device. The electronic device may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The speaker 170A, also referred to as a "loudspeaker", is configured to convert an audio electrical signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset.

The pressure sensor 180A is configured to sense a pressure signal, and can convert the pressure signal into an electrical signal. The gyroscope sensor 180B may be configured to determine a motion posture of the electronic device. The barometric pressure sensor 180C is configured to measure barometric pressure. The magnetic sensor 180D includes a Hall sensor. The acceleration sensor 180E may detect accelerations in various directions (usually on three axes) of the electronic device. The distance sensor 180F is configured to measure a distance. The optical proximity sensor 180G may include, for example, a light emitting diode (LED) and an optical detector, for example, a photodiode. The light emitting diode may be an infrared light emitting diode. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch component". The bone conduction sensor 180M may obtain a vibration signal.

The button 190 includes a power button, a volume button, and the like.

The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

In an embodiment of this application, in step S201, voice data of the user may be obtained by using the microphone 170C; or a text input of the user may be obtained by using the display 194 and the button 190.

In step S203, the electronic device may store the target data in the internal memory 121, or store the target data in the external memory through the external memory interface 120.

In step S204, when the display manner is voice broadcast, the target data may be voice-broadcast by using the audio module 170 and the speaker 170A; or when the display manner is text display, the target data may be directly displayed on the display 194.

A software system of the electronic device may use a layered architecture, an event-driven architecture, a microkernel architecture, a micro service architecture, or a cloud architecture. In this embodiment of the present invention, an Android system of a layered architecture is used as an example to illustrate the software structure of the electronic device.

FIG. 15 is an example schematic diagram of a software architecture of an electronic device according to an embodiment of this application.

As shown in FIG. 15, software is divided into several layers by using a layered architecture, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include applications such as Calendar, Memo, Voice Assistant, and SMS. The application layer may further include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 15, the application framework layer may include a window manager, a content provider, a view system, a phone manager, a resource manager, a notification manager, and the like.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications. The media library supports playback and recording in a plurality of commonly used audio and video formats, and static image files. The media library may support a plurality of audio and video encoding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a storage driver, a display driver, a camera driver, an audio driver, and a sensor driver.

The storage driver may be configured to store the target data, or store the target data in a determined storage manner.

After receiving a display manner that is of the target data and that is determined by a data display module, the application at the application layer displays the target data in the determined display manner.

FIG. 16A and FIG. 16B each are an example schematic diagram of a privacy level identification module according to an embodiment of this application.

The privacy level identification module is a functional module configured to determine a privacy level of target data. The privacy level identification module may be invoked to implement step S202 in FIG. 2. An input of the privacy level identification module may be the target data or a semantic meaning of the target data. The input may further include other information like a device type. An output of the privacy level identification module is the privacy level of the target data. The output of the privacy level identification module may further include an intent and a slot of the target data.

As shown in FIG. 16A, the input of the privacy level identification module may be the target data or a word vector corresponding to the target data. The privacy level identification module performs feature extraction on the target data, to obtain a feature of the target data; and determines an intent and a slot of the target data based on the feature of the target data, to determine the privacy level of the target data based on the intent and the slot.

The privacy level of the target data may be further determined based on other information like the intent, the slot, and the device type.

As shown in FIG. 16B, different from FIG. 16A, the privacy level identification module may further determine the privacy level of the target data based on the feature of the target data, for example, the semantic meaning of the target data.

A data storage module is a functional module configured to store the target data in a storage medium based on the privacy level of the target data.

Optionally, in some embodiments of this application, the data storage module is further configured to update the privacy level of the data in the storage medium. For example, when the privacy level of the data has a time identifier, the data storage module may update the privacy level of the data based on a system time.

FIG. 16C and FIG. 16D each are an example schematic diagram of a data display module according to an embodiment of this application.

The data display module is a functional module configured to determine a presentation manner of the target data. An input of the data display module may be the target data and the privacy level of the target data, and an output of the data display module may be the presentation manner of the target data. The presentation manner includes a verification manner and a display manner.

As shown in FIG. 16C, after receiving the target data and the privacy level of the target data, the data display module first determines a verification manner, for example, fingerprint verification, voiceprint verification, face verification, or password verification, based on the privacy level. After the verification succeeds, the display manner, for example, text display, is determined based on the privacy level.

As shown in FIG. 16D, different from FIG. 16C, the data display module may determine, based on the privacy level, that the verification manner is a verification-free manner, and then directly determine the display manner, for example, text display.

In other words, with reference to FIG. 2, FIG. 16A, FIG. 16B, FIG. 16C, and FIG. 16D, the privacy level identification module may be configured to perform step 202, and the data display module may be configured to perform step S204 and step S205.

According to the context, the term "when" used in the foregoing embodiments may be interpreted as "if", "after", "in response to determining", or "in response to detecting". Similarly, according to the context, the phrase "when it is determined that" or "if (a stated condition or event) is detected" may be interpreted as a meaning of "if it is determined that" or "in response to determining" or "when (a stated condition or event) is detected" or "in response to detecting (a stated condition or event)".

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

Persons of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

## Claims

1. A data protection method, applied to a first electronic device, comprising:
receiving a first input, and obtaining first target data, wherein a source of the first input comprises at least one of a voice input of a user, a text input of the user, and information obtained from an application on the first electronic device;
storing the first target data;
determining a privacy level of the first target data as a first privacy level, wherein different privacy levels correspond to different presentation manners;
receiving a first request, wherein the first request is used to request to obtain the first target data; and
in response to the first request, outputting the first target data in a first presentation manner corresponding to the first privacy level.

2. The method according to claim 1, wherein the determining a privacy level of the first target data as a first privacy level specifically comprises:
after the first request is received, determining the privacy level of the first target data as the first privacy level; or
before the storing the first target data, determining the privacy level of the first target data as the first privacy level, and storing the first target data and the first privacy level.

3. The method according to claim 2, wherein the storing the first target data and the first privacy level specifically comprises:
storing the first target data and the first privacy level in a first storage manner, wherein the first storage manner corresponds to the first privacy level, the different privacy levels correspond to different storage manners, and the storage manner comprises the first storage manner, wherein
the first storage manner comprises: a first encryption manner, a first storage area, and a first storage format.

4. The method according to any one of claims 1 to 3, wherein the determining a privacy level of the first target data as a first privacy level specifically comprises:
determining a semantic meaning of the first target data as a first semantic meaning; and
determining, based on the first semantic meaning, the privacy level of the first target data as the first privacy level.

5. The method according to claim 4, wherein the determining a semantic meaning of the first target data as a first semantic meaning specifically comprises:
determining, based on the first target data and a context of the first target data, the semantic meaning of the first target data as the first semantic meaning.

6. The method according to claim 4 or 5, wherein the privacy level is further related to a device type of an electronic device that receives the first input for the first time; and
the determining, based on the first semantic meaning, the privacy level of the first target data as the first privacy level specifically comprises: determining, based on the semantic meaning of the first target data and the device type of the electronic device, the privacy level of the first target data as the first privacy level, wherein the device type comprises a private device and a public device, and the public device is an electronic device used by a plurality of users.

7. The method according to claim 6, wherein the method further comprises: receiving third target data, wherein a second electronic device that receives the third target data for the first time is the public device, and the first electronic device is the private device; and
determining, based on a semantic meaning of the third target data and a device type of the second electronic device, a privacy level of the third target data as a third privacy level, wherein the semantic meaning of the third target data is the same as or similar to the semantic meaning of the first target data, and the third privacy level is lower than the first privacy level.

8. The method according to any one of claims 1 to 7, wherein the first target data has time validity, and the method further comprises:
determining that time information in the first target data is a first time identifier, wherein the first time identifier corresponds to a first moment, and the first target data has different privacy levels before the first moment and after the first moment.

9. The method according to claim 8, wherein that the first target data has different privacy levels before the first moment and after the first moment specifically comprises:
determining the privacy level of the first target data as the first privacy level before the first moment; and
updating the privacy level of the first target data to a fourth privacy level after the first moment.

10. The method according to any one of claims 1 to 3, wherein the determining a privacy level of the first target data as a first privacy level specifically comprises:
determining, based on a privacy level identification model and the first target data, the privacy level of the first target data as the first privacy level, wherein an input of the privacy level identification model comprises target data or a feature used to represent the target data, and an output of the privacy level identification model comprises a privacy level of the target data.

11. The method according to claim 10, wherein the privacy level identification model is further configured to determine a mapping relationship between a semantic meaning of the first target data and the privacy level of the first target data.

12. The method according to any one of claims 1 to 11, wherein the method further comprises:
receiving a second input, and obtaining second target data, wherein the second target data is different from the first target data;
storing the second target data;
determining a privacy level of the second target data as a second privacy level, wherein the second privacy level is different from the first privacy level;
receiving a second request, wherein the second request is used to request to obtain the second target data; and
in response to the second request, outputting the second target data in a second presentation manner corresponding to the second privacy level, wherein the second presentation manner is different from the first presentation manner.

13. The method according to any one of claims 1 to 12, wherein
the presentation manner comprises one or a combination of a display manner and a verification manner; and
the verification manner is used to verify a user identity, and the display manner comprises one or more of text display and voice broadcast.

14. The method according to claim 12 or 13, wherein
the first target data comprises identity information or property information; and
the second target data comprises itinerary information or conference information.

15. A data protection method, applied to a first electronic device, comprising:
in response to a first input, obtaining and storing first target data;
in response to a second input, obtaining and storing second target data;
receiving a first request of a user for obtaining the first target data, and outputting the first target data to the user in a first presentation manner; and
receiving a second request of the user for obtaining the second target data, and outputting the second target data to the user in a second presentation manner, wherein the first electronic device determines that privacy degrees of the first target data and the second target data are different, and the first presentation manner is different from the second presentation manner.

16. The method according to claim 15, wherein the first electronic device identifies different privacy degrees by using a privacy level, and that the electronic device determines that privacy degrees of the first target data and the second target data are different, and the first presentation manner is different from the second presentation manner specifically comprises:
the first electronic device determines that a privacy level of the first target data is a first privacy level, and a privacy level of the second target data is a second privacy level, wherein the first privacy level is higher than the second privacy level; and
security of the first presentation manner is higher than security of the second presentation manner.

17. The method according to claim 16, wherein
a quantity of times of verification manners comprised in the first presentation manner is greater than a quantity of times of verification manners comprised in the second presentation manner; and/or security of the verification manner comprised in the first presentation manner is higher than security of the verification manner comprised in the second presentation manner; and/or a display manner comprised in the first presentation manner is text display, and a display manner comprised in the second presentation manner is text display and voice broadcast.

18. The method according to claim 16 or 17, wherein
the privacy level is related to a semantic meaning of target data; and
that the first electronic device determines that privacy degrees of the first target data and the second target data are different specifically comprises:
the first electronic device determines, based on a semantic meaning of the first target data, that the first target data is at the first privacy level; and
the first electronic device determines, based on a semantic meaning of the second target data, that the second target data is at the second privacy level.

19. The method according to any one of claims 16 to 18, wherein the privacy level of the first target data further has time validity, the first target data has different privacy levels before a first moment corresponding to a time identifier of the first target data and after the first moment, and the method further comprises:
in response to a request for the first target data, presenting the first target data in the first presentation manner before the first moment; and
in response to the request for the first target data, presenting the first target data in a third presentation manner after the first moment, wherein
security of the third presentation manner is lower than security of the first presentation manner.

20. The method according to claim 18 or 19, wherein the privacy level is further related to a device type of an electronic device that receives the target data for the first time, and the method further comprises:
if a second electronic device that receives the first target data for the first time is a private device, determining, by the first electronic device based on the semantic meaning of the first target data and a device type of the second electronic device, the privacy level of the first target data as the first privacy level; and
if a third electronic device that receives third target data for the first time is a public device, after the third target data is received, determining, by the first electronic device based on a semantic meaning of the third target data and a device type of the third electronic device, a privacy level of the third target data as a third privacy level, wherein the semantic meaning of the third target data is the same as or similar to the semantic meaning of the first target data, wherein
the third privacy level is lower than the first privacy level.

21. The method according to any one of claims 15 to 20, wherein that the first electronic device determines that privacy degrees of the first target data and the second target data are different specifically comprises:
the first electronic device determines, based on a privacy level identification model, that the privacy degrees of the first target data and the second target data are different.

22. An electronic device, wherein the electronic device comprises one or more processors and a memory, the memory is coupled to the one or more processors, the memory is configured to store computer program code, the computer program code comprises computer instructions, and the one or more processors invoke the computer instructions, so that the electronic device performs the method according to any one of claims 1 to 21.

23. A chip system, wherein the chip system is applied to an electronic device, the chip system comprises one or more processors, and the processor is configured to invoke computer instructions, so that the electronic device performs the method according to any one of claims 1 to 21.

24. A computer-readable storage medium, comprising instructions, wherein when the instructions are run on an electronic device, the electronic device is enabled to perform the method according to any one of claims 1 to 21.

25. A computer program product, comprising computer instructions, wherein when the computer instructions are executed by one or more processors, the method according to any one of claims 1 to 21 is implemented.
